# EUROPEAN PATENT APPLICATION

(11) **EP 3 817 421 A1**
(43) Date of publication of application: **05.05.2021**
(21) Application number: 19808078.0
(22) Date of filing: 23.05.2019
(51) Int. Cl.: H04W 12/02

(54) **PAGING PROCESSING METHOD AND APPARATUS**

(30) Priority: 24.05.2018 CN 201810510941; 18.01.2019 CN 201910047972
(71) Applicant: HUAWEI TECHNOLOGIES CO., LTD., Shenzhen, Guangdong 518129 (CN)
(72) Inventor: LI, Hong, Shenzhen, Guangdong 518129 (CN); SHU, Lin, Shenzhen, Guangdong 518129 (CN); LIU, Tao, Shenzhen, Guangdong 518129 (CN); JIN, Wenjun, Shenzhen, Guangdong 518129 (CN); ZHUO, Chao, Shenzhen, Guangdong 518129 (CN); CHEN, Hongqiang, Shenzhen, Guangdong 518129 (CN)
(74) Representative: Körber, Martin Hans
(86) International application number: PCT/CN2019/088203
(87) International publication number: WO 2019/223769

(57) **Abstract**

This application provides a paging processing method and apparatus, to resolve a prior-art problem that a terminal device is vulnerable to a paging attack from a false network. The method includes: performing, by a mobility management network element, security protection on a paging identity of a terminal device by using a security context obtained by negotiating with the terminal device by the mobility management network element, to obtain a first paging identity, and sending a first paging message to a base station; sending, by the base station, a second paging message to the terminal device, where the second paging message carries the first paging identity and first indication information, and the first indication information is used to indicate that the first paging identity is a security-protected paging identity; and performing, by the terminal device, security verification on the first paging identity by using the security context based on the first indication information, to obtain a second paging identity, and processing the second paging message based on the second paging identity and an identity of the terminal device.

## Description

This application claims priority to Chinese Patent Application No. 201810510941.8, filed with the Chinese Patent Office on May 24, 2018 and entitled "PAGING PROCESSING METHOD AND APPARATUS", and claims priority to Chinese Patent Application No. 201910047972.9, filed with the Chinese Patent Office on January 18, 2019 and entitled "PAGING PROCESSING METHOD AND APPARATUS", which are incorporated herein by reference in their entireties.

### TECHNICAL FIELD

This application relates to the field of wireless communications technologies, and in particular, to a paging processing method and apparatus.

### BACKGROUND

A paging channel used by a base station to page (paging) a terminal device is a common channel, and all information carried on the paging channel is transmitted in plaintext (without security protection). Therefore, the terminal device cannot distinguish whether a paging message is sent by a false network or a real base station, and normally responds to any received paging message.

The false network can obtain a paging identity of the terminal device after attracting, by increasing emission energy of the false network, the terminal device to camp on the false network. In addition, the false network may obtain system information of the real base station by using the terminal device, analyze and calculate the system information of the real base station, and obtain, with reference to the obtained paging identity, information about time domain in which the real base station sends the paging message. The false network has functions of the base station and a mobility management network element. After obtaining the paging identity of the terminal device and the information about time domain in which the real base station sends the paging message, the false network can disguise itself as the real base station, and frequently initiate paging messages to the terminal device in time domain in which the real base station sends the paging message to the terminal device, to perform a paging attack on the terminal device. Consequently, successful communication between the terminal device and a network side is affected.

### SUMMARY

This application provides a paging processing method and apparatus, to resolve a prior-art problem that a terminal device is vulnerable to a paging attack from a false network.

According to a first aspect, this application provides a paging processing method. The method includes: receiving, by a terminal device, a first paging message, where the first paging message carries a first paging identity and first indication information, and the first indication information is used to indicate that the first paging identity is a security-protected paging identity; performing, by the terminal device based on the first indication information, security verification on the first paging identity by using a security context obtained by negotiating with a mobility management network element by the terminal device, to obtain a second paging identity; and processing the first paging message based on the second paging identity and an identity of the terminal device.

According to the foregoing method, when receiving the first paging message, the terminal device performs security verification on the first paging identity by using the security context obtained by negotiating with the mobility management network element by the terminal device, to obtain the second paging identity, and processes the first paging message based on the second paging identity and the identity of the terminal device, instead of responding upon receiving the paging message. Therefore, a paging attack from a false network on the terminal device can be avoided.

In a possible implementation, on a 4G network, the mobility management network element may be a mobility management entity MME. On a 5G network, the mobility management network element may be an access and mobility management function AMF entity.

In a possible implementation, the terminal device processes the first paging message by using the following specific method:
responding, by the terminal device, to the first paging message when determining that the second paging identity is consistent with the identity of the terminal device; or
ignoring, by the terminal device, the first paging message when determining that the second paging identity is inconsistent with the identity of the terminal device.

The false network cannot obtain the security context obtained by negotiating with the mobility management network element by the terminal device. Therefore, the terminal device responds to the first paging message when the second paging identity is consistent with the identity of the terminal device, or ignores the first paging message when the second paging identity is inconsistent with the identity of the terminal device, so that the paging attack from the false network on the terminal device can be effectively avoided.

In a possible implementation, the terminal device may further receive a second paging message, where the second paging message does not carry the first indication information; and the terminal device ignores the second paging message; or
the terminal device may further receive a second paging message, where the second paging message carries a third paging identity and second indication information, and the second indication information is used to indicate that the third paging identity is in plaintext; and the terminal device ignores the second paging message.

Security protection is usually not performed on a paging identity carried in a paging message sent by the false network, and the paging message does not carry the first indication information. That is, the paging message sent by the false network is usually the second paging message. Therefore, the terminal device ignores the second paging message, so that the paging attack from the false network on the terminal device can be avoided, and the terminal device can successfully communicate with a real base station.

In a possible implementation, before receiving the first paging message, the terminal device further determines that the mobility management network element supports a paging message carrying a security-protected paging identity.

In a possible implementation, the terminal device determines, by using the following specific steps, that the mobility management network element supports the paging message carrying the security-protected paging identity:
sending, by the terminal device, a registration request to the mobility management network element, where the registration request carries third indication information, and the third indication information is used to indicate that the terminal device supports the paging message carrying the security-protected paging identity;
receiving, by the terminal device, a registration accept message sent by the mobility management network element, where the registration accept message carries fourth indication information, and the fourth indication information is used to indicate that the mobility management network element supports the paging message carrying the security-protected paging identity; and
determining, by the terminal device based on the fourth indication information, that the mobility management network element supports the paging message carrying the security-protected paging identity.

In a possible implementation, on the 4G network, the registration request may be an attach request (attach request) or a tracking area update request (TAU request). On the 5G network, the registration request is a registration request. Correspondingly, when the registration request is an attach request, the registration accept message is an attach accept (attach accept) message. When the registration request is a tracking area update request, the registration accept message is a tracking area update accept (TAU accept) message. When the registration request is a registration request, the registration accept message is a registration accept message.

According to a second aspect, this application provides a paging processing method. The method includes: performing, by a mobility management network element, security protection on a paging identity of a terminal device by using a security context obtained by negotiating with the terminal device by the mobility management network element, to obtain a security-protected paging identity; and sending a paging message to a base station, where the paging message includes the paging identity of the terminal device and the security-protected paging identity.

According to the foregoing method, the mobility management network element performs security protection on the paging identity of the terminal device by using the security context obtained by negotiating with the terminal device by the mobility management network element, to obtain the security-protected paging identity, and sends, to the base station, the paging message carrying the paging identity of the terminal device and the security-protected paging identity. In this way, the base station can send, to the terminal device, the paging message carrying the security-protected paging identity, so that security of the paging message received by the terminal device can be improved, and a paging attack from a false network on the terminal device can be avoided.

In a possible implementation, on a 4G network, the mobility management network element may be a mobility management entity MME. On a 5G network, the mobility management network element may be an access and mobility management function AMF entity.

In a possible implementation, the mobility management network element may perform security protection on the paging identity of the terminal device in the following manner: encrypting, by the mobility management network element, the paging identity of the terminal device by using the security context obtained by negotiating with the terminal device by the mobility management network element; performing, by the mobility management network element, integrity protection on the paging identity of the terminal device by using the security context obtained by negotiating with the terminal device by the mobility management network element; encrypting, by the mobility management network element, the paging identity of the terminal device, and performing integrity protection on the encrypted paging identity by using the security context obtained by negotiating with the terminal device by the mobility management network element; performing, by the mobility management network element, integrity protection on the paging identity of the terminal device, and performing anti-replay processing on the integrity-protected paging identity by using the security context obtained by negotiating with the terminal device by the mobility management network element; or encrypting, by the mobility management network element, the paging identity of the terminal device, performing integrity protection on the encrypted paging identity, and performing anti-replay processing on the integrity-protected paging identity by using the security context obtained by negotiating with the terminal device by the mobility management network element.

In a possible implementation, before performing security protection on the paging identity of the terminal device by using the security context obtained by negotiating with the terminal device by the mobility management network element, the mobility management network element further determines that the terminal device supports a paging message carrying a security-protected paging identity; and sends, to the terminal device, indication information for indicating that the mobility management network element supports the paging message carrying the security-protected paging identity.

In a possible implementation, the mobility management network element determines, by using the following steps, that the terminal device supports the paging message carrying the security-protected paging identity: receiving a registration request sent by the terminal device, where the registration request carries indication information for indicating that the terminal device supports the paging message carrying the security-protected paging identity; and determining, based on the indication information carried in the registration request, that the terminal device supports the paging message carrying the security-protected paging identity. In this case, the mobility management network element sends, to the terminal device by sending a registration accept message to the terminal device, the indication information for indicating that the mobility management network element supports the paging message carrying the security-protected paging identity, where the registration accept message carries the indication information for indicating that the mobility management network element supports the paging message carrying the security-protected paging identity.

In a possible implementation, on the 4G network, the registration request may be an attach request (attach request) or a tracking area update request (TAU request). On the 5G network, the registration request is a registration request. Correspondingly, when the registration request is an attach request, the registration accept message is an attach accept (attach accept) message. When the registration request is a tracking area update request, the registration accept message is a tracking area update accept (TAU accept) message. When the registration request is a registration request, the registration accept message is a registration accept message.

According to a third aspect, this application provides a paging processing method. The method includes: receiving, by a base station, a first paging message sent by a mobility management network element, where the first paging message carries a first paging identity and a second paging identity, the first paging identity is obtained by performing security protection on the second paging identity by the mobility management network element by using a security context obtained by negotiating with a terminal device by the mobility management network element, and the second paging identity is a paging identity of the terminal device; and sending, by the base station, a second paging message to the terminal device, where the second paging message carries the first paging identity and first indication information, and the first indication information is used to indicate that the first paging identity is a security-protected paging identity.

According to the foregoing method, the base station receives the first paging message sent by the mobility management network element, determines, based on the second paging identity in the first paging message, the terminal device to be paged by the base station, and sends the second paging message to the terminal device, where the second paging message carries the first paging identity and the first indication information, and the first indication information is used to indicate that the first paging identity is the security-protected paging identity, so that security of the second paging message received by the terminal device can be improved, and a paging attack from a false network on the terminal device can be avoided.

In a possible implementation, on a 4G network, the mobility management network element may be a mobility management entity MME. On a 5G network, the mobility management network element may be an access and mobility management function AMF entity.

According to a fourth aspect, this application provides a paging processing method. The method includes: receiving, by a terminal device, a first paging message sent by a first network device, where the first paging message carries a first paging identity and first indication information, and the first indication information is used to indicate that the first paging identity is a security-protected paging identity; when a communication link between the terminal device and the first network device is in an inactive state, performing, by the terminal device based on the first indication information, security verification on the first paging identity by using a security context obtained by negotiating with the first network device by the terminal device, to obtain a second paging identity; and processing the first paging message based on the second paging identity and an identity of the terminal device.

According to the foregoing method, when the communication link between the terminal device and the first network device is in the inactive state, the terminal device performs, based on the first indication information in the first paging message sent by the first network device, security verification on the first paging identity in the first paging message by using the security context obtained by negotiating with the first network device by the terminal device, to obtain the second paging identity. The terminal device processes the first paging message based on the second paging identity and the identity of the terminal device. The terminal device responds to the first paging message only when the second paging identity is consistent with the identity of the terminal device; otherwise, the terminal device ignores the paging message, instead of responding upon receiving the paging message. Therefore, a paging attack from a false network on the terminal device can be avoided.

In a possible implementation, the terminal device may process the first paging message by using the following method: responding, by the terminal device, to the first paging message when determining that the second paging identity is consistent with the identity of the terminal device; or ignoring, by the terminal device, the first paging message when determining that the second paging identity is inconsistent with the identity of the terminal device.

The false network cannot obtain the security context obtained by negotiating with the first network device by the terminal device. Therefore, the terminal device responds to the first paging message when the second paging identity is consistent with the identity of the terminal device, or ignores the first paging message when the second paging identity is inconsistent with the identity of the terminal device, so that the paging attack from the false network on the terminal device can be effectively avoided.

In a possible implementation, the method further includes: receiving, by the terminal device, a second paging message, where the second paging message does not carry the first indication information; and ignoring, by the terminal device, the second paging message; or receiving, by the terminal device, a second paging message, where the second paging message carries a third paging identity and second indication information, and the second indication information is used to indicate that the third paging identity is in plaintext; and ignoring, by the terminal device, the second paging message.

Security protection is usually not performed on a paging identity carried in a paging message sent by the false network, and the paging message does not carry the first indication information. That is, the paging message sent by the false network is usually the second paging message. Therefore, the terminal device ignores the second paging message, so that the paging attack from the false network on the terminal device can be avoided, and the terminal device can successfully communicate with a real network.

In a possible implementation, before receiving the first paging message, the terminal device further determines that a second network device supports a paging message carrying a security-protected paging identity.

In a possible implementation, the terminal device may determine, by using the following method, that the second network device supports the paging message carrying the security-protected paging identity: sending, by the terminal device, a registration request to the second network device, where the registration request carries third indication information, and the third indication information is used to indicate that the terminal device supports the paging message carrying the security-protected paging identity; receiving, by the terminal device, a registration accept message sent by the second network device, where the registration accept message carries fourth indication information, and the fourth indication information is used to indicate that the second network device supports the paging message carrying the security-protected paging identity; and determining, by the terminal device based on the fourth indication information, that the second network device supports the paging message carrying the security-protected paging identity.

According to a fifth aspect, this application provides a paging processing method. The method includes: performing, by a first network device after receiving a downlink data packet or a downlink signaling packet, security protection on a paging identity of a terminal device by using a security context obtained by negotiating with the terminal device by the first network device, to obtain a security-protected paging identity; and sending a paging message to the terminal device, where the paging message carries the security-protected paging identity and indication information used to indicate that the carried paging identity is a security-protected paging identity.

According to the foregoing method, when a communication link between the first network device and the terminal device is in an inactive state, the first network device performs security protection on the paging identity of the terminal device by using the security context obtained by negotiating with the terminal device by the first network device, to obtain the security-protected paging identity, and sends the paging message carrying the paging identity of the terminal device and the security-protected paging identity to the terminal device, so that security of the paging message received by the terminal device can be improved, and a paging attack from a false network on the terminal device can be avoided.

In a possible implementation, the first network device may perform security protection on the paging identity of the terminal device in the following manner: encrypting, by the first network device, the paging identity of the terminal device by using the security context obtained by negotiating with the terminal device by the first network device; performing, by the first network device, integrity protection on the paging identity of the terminal device by using the security context obtained by negotiating with the terminal device by the first network device; encrypting, by the first network device, the paging identity of the terminal device, and performing integrity protection on the encrypted paging identity by using the security context obtained by negotiating with the terminal device by the first network device; performing, by the first network device, integrity protection on the paging identity of the terminal device, and performing anti-replay processing on the integrity-protected paging identity by using the security context obtained by negotiating with the terminal device by the first network device; or encrypting, by the first network device, the paging identity of the terminal device, performing integrity protection on the encrypted paging identity, and performing anti-replay processing on the integrity-protected paging identity by using the security context obtained by negotiating with the terminal device by the first network device.

In a possible implementation, before receiving the downlink data packet or the downlink signaling packet, the first network device further determines that the terminal device and a second network device support a paging message carrying a security-protected paging identity.

In a possible implementation, the first network device determines, by using the following specific steps, that the terminal device and the second network device support the paging message carrying the security-protected paging identity: receiving, by the first network device, indication information sent by the second network device, where the indication information sent by the second network device is used to indicate that the second network device and the terminal device support the paging message carrying the security-protected paging identity; and determining, by the first network device based on the indication information sent by the second network device, that the terminal device and the second network device support the paging message carrying the security-protected paging identity.

According to a sixth aspect, this application provides a paging processing method. The method includes: counting, by a terminal device, a quantity of paging messages received in first specified duration; and sending, to a base station when determining that the counted quantity of paging messages is greater than or equal to a first threshold, a data packet or a signaling packet that is used to maintain a communication connection to the base station.

According to the foregoing method, the terminal device counts the quantity of paging messages received in the first specified duration, and sends, to the base station when determining that the counted quantity of paging messages is greater than or equal to the first threshold, the data packet or the signaling packet that is used to maintain the communication connection to the base station, so that the terminal device is in a connected mode. The terminal device does not respond to the paging message when the terminal device is in the connected mode. Therefore, a paging attack from a false network on the terminal device can be avoided.

In a possible implementation, the terminal device sends, to the base station in the following manner, the data packet or the signaling packet that is used to maintain the communication connection to the base station: sending, by the terminal device to the base station in second specified duration based on a specified periodicity, the data packet or the signaling packet that is used to maintain the communication connection to the base station, where the specified periodicity is less than a second threshold, and the second threshold is duration for maintaining the communication connection between the terminal device and the base station.

According to the foregoing method, the terminal device sends, to the base station based on the specified periodicity, the data packet or the signaling packet that is used to maintain the communication connection to the base station, so that the terminal device is in the connected mode in the second duration. The terminal device does not respond to the paging message when the terminal device is in the connected mode. Therefore, the paging attack from the false network on the terminal device can be avoided.

In a possible implementation, the paging message carries a permanent paging identity, or the paging message carries a temporary paging identity.

In a possible implementation, the paging messages include a first-type paging message and a second-type paging message, the first-type paging message carries a permanent paging identity, and the second-type paging message carries a temporary paging identity; and the quantity of paging messages that is counted by the terminal device is a sum of a quantity of first-type paging messages received in the first specified duration and a quantity of second-type paging messages received in the first specified duration.

In a possible implementation, the terminal device separately counts quantities of paging messages received from different base stations in the first specified duration. When determining that a quantity of paging messages received from any base station is greater than or equal to the first threshold, the terminal device sends, to the base station, the data packet or the signaling packet that is used to maintain the communication connection to the base station.

According to a seventh aspect, this application provides a paging processing method. The method includes: counting, by a terminal device, a quantity of paging messages that are received in specified duration and that each carry a temporary paging identity; sending, to a mobility management network element when determining that the counted quantity of paging messages is greater than or equal to a specified threshold, indication information used to request to allocate a globally unique temporary identity GUTI; receiving, by the terminal device, the GUTI sent by the mobility management network element; and processing, based on the received GUTI, a paging message carrying a temporary paging identity.

According to the foregoing method, the terminal device counts the quantity of paging messages that are received in the specified duration and that each carry the temporary paging identity; sends, to the mobility management network element when determining that the counted quantity of paging messages is greater than or equal to the specified threshold, the indication information used to request to allocate the globally unique temporary identity GUTI; receives the GUTI allocated by the mobility management network element; and processes, based on the GUTI allocated by the mobility management network element, the paging message carrying the temporary paging identity. A false network cannot obtain the GUTI allocated by the mobility management network element to the terminal device based on the indication information. That is, a paging message sent by the false network to the terminal device does not carry the new GUTI allocated by the mobility management network element to the terminal device. Therefore, after the terminal device obtains the new GUTI allocated by the mobility management network element to the terminal device, the terminal device does not respond to the paging message sent by the false network, so that a paging attack from the false network on the terminal device can be avoided.

In a possible implementation, on a 4G network, the mobility management network element may be a mobility management entity MME. On a 5G network, the mobility management network element may be an access and mobility management function AMF entity.

In a possible implementation, the terminal device sends, to the mobility management network element in the following manner, the indication information used to request to allocate the GUTI: sending, by the terminal device, a location update request to the mobility management network element, where the location update request carries the indication information used to request to allocate the GUTI. In this case, the terminal device receives, in the following manner, the GUTI sent by the mobility management network element: receiving, by the terminal device, a location update accept message sent by the mobility management network element, where the location update accept message carries the GUTI allocated by the mobility management network element to the terminal device.

In a possible implementation, on the 4G network, the location update request is a tracking area update request (TAU request). On the 5G network, the location update request is a registration request. Correspondingly, when the location update request is a tracking area update request, the location update accept message is a tracking area update accept (TAU accept) message. When the location update request is a registration request, the location update accept message is a registration accept message.

In a possible implementation, the terminal device receives, in the following manner, the GUTI sent by the mobility management network element:
receiving, by the terminal device, a GUTI reallocation message sent by the mobility management network element, where the GUTI reallocation message carries the GUTI allocated by the mobility management network element to the terminal device; or
receiving, by the terminal device, a configuration update message sent by the mobility management network element, where the configuration update message carries the GUTI allocated by the mobility management network element to the terminal device.

In a possible implementation, the terminal device processes, by using the following specific steps, the paging message carrying the temporary paging identity: determining, by the terminal device, a current temporary paging identity of the terminal device based on the received GUTI; and when the temporary paging identity carried in the paging message received by the terminal device is consistent with the current temporary paging identity of the terminal device, responding, by the terminal device, to the paging message; or when the temporary paging identity carried in the paging message received by the terminal device is inconsistent with the current temporary paging identity of the terminal device, ignoring, by the terminal device, the paging message.

According to an eighth aspect, this application provides a paging processing method. The method includes: receiving, by a mobility management network element, indication information that is sent by a terminal device and that is used to request to allocate a globally unique temporary identity GUTI; allocating the GUTI to the terminal device based on the indication information; and sending the GUTI to the terminal device.

According to the foregoing method, the mobility management network element may allocate the GUTI to the terminal device based on the indication information that is sent by the terminal device and that is used to request to allocate the globally unique temporary identity GUTI, and send the GUTI to the terminal device, so that the terminal device can process, based on the GUTI allocated by the mobility management network element, a paging message carrying a temporary paging identity. A false network cannot obtain the GUTI allocated by the mobility management network element to the terminal device. That is, a paging message sent by the false network to the terminal device does not carry the new GUTI allocated by the mobility management network element to the terminal device. Therefore, after the terminal device obtains the new GUTI allocated by the mobility management network element to the terminal device, the terminal device does not respond to the paging message sent by the false network, so that a paging attack from the false network on the terminal device can be avoided.

In a possible implementation, on a 4G network, the mobility management network element may be a mobility management entity MME. On a 5G network, the mobility management network element may be an access and mobility management function AMF entity.

In a possible implementation, the mobility management network element receives, in the following manner, the indication information that is sent by the terminal device and that is used to request to allocate the globally unique temporary identity GUTI: receiving, by the mobility management network element, a location update request sent by the terminal device, where the location update request carries the indication information used to request to allocate the GUTI. In this case, the mobility management network element sends the GUTI to the terminal device in the following manner: sending, by the mobility management network element, a location update accept message to the terminal device, where the location update accept message carries the GUTI.

In a possible implementation, on the 4G network, the location update request is a tracking area update request (TAU request). On the 5G network, the location update request is a registration request. Correspondingly, when the location update request is a tracking area update request, the location update accept message is a tracking area update accept (TAU accept) message. When the location update request is a registration request, the location update accept message is a registration accept message.

In a possible implementation, the mobility management network element sends the GUTI to the terminal device in the following manner: sending, by the mobility management network element, a GUTI reallocation message to the terminal device, where the GUTI reallocation message carries the GUTI; or sending, by the mobility management network element, a configuration update message to the terminal device, where the configuration update message carries the GUTI.

According to a ninth aspect, this application provides a terminal device. The terminal device has a function of implementing behavior of the terminal device in the foregoing method instance in the first aspect. The function may be implemented by using hardware, or may be implemented by hardware executing corresponding software. The hardware or software includes one or more modules corresponding to the function.

In a possible implementation, a receiving unit, a sending unit, and a processing unit are included in a structure of the terminal device. The units may perform corresponding functions in the method example in the first aspect. For details, refer to detailed descriptions in the method example. Details are not described herein again.

In a possible implementation, a transmitter, a receiver, a controller/processor, and a modem processor are included in a structure of the terminal device. The controller/processor is configured to support the terminal device in performing a corresponding function in the method provided in the first aspect. The memory is coupled to the controller/processor, and the memory stores a program instruction and data that are necessary for the terminal device.

According to a tenth aspect, this application provides a mobility management network element. The mobility management network element has a function of implementing behavior of the mobility management network element in the foregoing method instance in the second aspect. The function may be implemented by using hardware, or may be implemented by hardware executing corresponding software. The hardware or software includes one or more modules corresponding to the function.

In a possible implementation, a receiving unit, a sending unit, and a processing unit are included in a structure of the mobility management network element. The units may perform corresponding functions in the method example in the second aspect. For details, refer to detailed descriptions in the method example. Details are not described herein again.

In a possible implementation, a receiver/receiver, a controller/processor, a memory, and a communications unit are included in a structure of the mobility management network element. The controller/processor is configured to support the mobility management network element in performing a corresponding function in the method provided in the second aspect. The memory is coupled to the controller/processor, and the memory stores a program instruction and data that are necessary for the mobility management network element.

According to an eleventh aspect, this application provides a base station. The base station has a function of implementing behavior of the base station in the foregoing method instance in the third aspect. The function may be implemented by using hardware, or may be implemented by hardware executing corresponding software. The hardware or software includes one or more modules corresponding to the function.

In a possible implementation, a receiving unit and a sending unit are included in a structure of the base station. The units may perform corresponding functions in the method example in the third aspect. For details, refer to detailed descriptions in the method example. Details are not described herein again.

In a possible implementation, a receiver/receiver, a controller/processor, a memory, and a communications unit are included in a structure of the base station. The controller/processor is configured to support the base station in performing a corresponding function in the method provided in the third aspect. The memory is coupled to the controller/processor, and the memory stores a program instruction and data that are necessary for the base station.

According to a twelfth aspect, this application provides a terminal device. The terminal device has a function of implementing behavior of the terminal device in the foregoing method instance in the fourth aspect. The function may be implemented by using hardware, or may be implemented by hardware executing corresponding software. The hardware or software includes one or more modules corresponding to the function.

In a possible implementation, a receiving unit and a processing unit are included in a structure of the terminal device. The units may perform corresponding functions in the method example in the fourth aspect. For details, refer to detailed descriptions in the method example. Details are not described herein again.

In a possible implementation, a transmitter, a receiver, a controller/processor, and a modem processor are included in a structure of the terminal device. The controller/processor is configured to support the terminal device in performing a corresponding function in the method provided in the fourth aspect. The memory is coupled to the controller/processor, and the memory stores a program instruction and data that are necessary for the terminal device.

According to a thirteenth aspect, this application provides a network device. The network device has a function of implementing behavior of the first network device in the foregoing method instance in the fifth aspect. The function may be implemented by using hardware, or may be implemented by hardware executing corresponding software. The hardware or software includes one or more modules corresponding to the function.

In a possible implementation, a receiving unit, a processing unit, and a sending unit are included in a structure of the network device. The units may perform corresponding functions in the method example in the fifth aspect. For details, refer to detailed descriptions in the method example. Details are not described herein again.

In a possible implementation, a receiver/receiver, a controller/processor, a memory, and a communications unit are included in a structure of the network device. The controller/processor is configured to support the network device in performing a corresponding function in the method provided in the fifth aspect. The memory is coupled to the controller/processor, and the memory stores a program instruction and data that are necessary for the network device.

According to a fourteenth aspect, this application provides a terminal device. The terminal device has a function of implementing behavior of the terminal device in the foregoing method instance in the sixth aspect. The function may be implemented by using hardware, or may be implemented by hardware executing corresponding software. The hardware or software includes one or more modules corresponding to the function.

In a possible implementation, a receiving unit and a processing unit are included in a structure of the terminal device. The units may perform corresponding functions in the method example in the sixth aspect. For details, refer to detailed descriptions in the method example. Details are not described herein again.

In a possible implementation, a transmitter, a receiver, a controller/processor, and a modem processor are included in a structure of the terminal device. The controller/processor is configured to support the terminal device in performing a corresponding function in the method provided in the sixth aspect. The memory is coupled to the controller/processor, and the memory stores a program instruction and data that are necessary for the terminal device.

According to a fifteenth aspect, this application provides a terminal device. The terminal device has a function of implementing behavior of the terminal device in the foregoing method instance in the seventh aspect. The function may be implemented by using hardware, or may be implemented by hardware executing corresponding software. The hardware or software includes one or more modules corresponding to the function.

In a possible implementation, a receiving unit, a sending unit, and a processing unit are included in a structure of the terminal device. The units may perform corresponding functions in the method example in the seventh aspect. For details, refer to detailed descriptions in the method example. Details are not described herein again.

In a possible implementation, a transmitter, a receiver, a controller/processor, and a modem processor are included in a structure of the terminal device. The controller/processor is configured to support the terminal device in performing a corresponding function in the method provided in the seventh aspect. The memory is coupled to the controller/processor, and the memory stores a program instruction and data that are necessary for the terminal device.

According to a sixteenth aspect, this application provides a mobility management network element. The mobility management network element has a function of implementing behavior of the mobility management network element in the foregoing method instance in the eighth aspect. The function may be implemented by using hardware, or may be implemented by hardware executing corresponding software. The hardware or software includes one or more modules corresponding to the function.

In a possible implementation, a receiving unit, a sending unit, and an allocation unit are included in a structure of the mobility management network element. The units may perform corresponding functions in the method example in the eighth aspect. For details, refer to detailed descriptions in the method example. Details are not described herein again.

In a possible implementation, a receiver/receiver, a controller/processor, a memory, and a communications unit are included in a structure of the mobility management network element. The controller/processor is configured to support the mobility management network element in performing a corresponding function in the method provided in the eighth aspect. The memory is coupled to the controller/processor, and the memory stores a program instruction and data that are necessary for the mobility management network element.

According to a seventeenth aspect, this application provides a communications system. The communications system includes the terminal device according to the first aspect, the mobility management network element according to the second aspect, and the base station according to the third aspect.

According to an eighteenth aspect, this application provides a communications system. The communications system includes the terminal device according to the first aspect, the mobility management network element according to the fourth aspect, and the network device according to the fifth aspect.

According to a nineteenth aspect, this application further provides a communications system. The communications system includes the terminal device according to the seventh aspect and the mobility management network element according to the eighth aspect.

According to a twentieth aspect, this application further provides a computer-readable storage medium. The computer storage medium stores a computer-executable instruction. When the instruction is run on a computer, the computer is enabled to perform the method according to any one of the implementations of any one of the foregoing aspects.

According to a twenty-first aspect, this application further provides a computer program product including an instruction. When the instruction is run on a computer, the computer is enabled to perform any method in any one of the foregoing aspects.

### BRIEF DESCRIPTION OF DRAWINGS

FIG. 1 is a schematic diagram of a 4G network architecture according to an embodiment of this application;
FIG. 2 is a schematic diagram of a 5G network architecture according to an embodiment of this application;
FIG. 3 is a schematic flowchart of a first paging processing method according to an embodiment of this application;
FIG. 4A and FIG. 4B are a schematic flowchart of the method according to a specific embodiment 1 of this application;
FIG. 5A and FIG. 5B are a schematic flowchart of the method according to a specific embodiment 2 of this application;
FIG. 6 is a schematic flowchart of a second paging processing method according to an embodiment of this application;
FIG. 7 is a schematic flowchart of a third paging processing method according to an embodiment of this application;
FIG. 8 is a schematic flowchart of the method according to a specific embodiment 3 of this application;
FIG. 9 is a schematic flowchart of the method according to a specific embodiment 4 of this application;
FIG. 10 is a schematic structural diagram of a paging processing apparatus according to an embodiment of this application;
FIG. 11 is a schematic structural diagram of a paging processing apparatus according to an embodiment of this application;
FIG. 12 is a schematic structural diagram of a paging processing apparatus according to an embodiment of this application;
FIG. 13 is a schematic structural diagram of a paging processing apparatus according to an embodiment of this application;
FIG. 14 is a schematic structural diagram of a paging processing apparatus according to an embodiment of this application;
FIG. 15 is a schematic structural diagram of a paging processing apparatus according to an embodiment of this application;
FIG. 16 is a schematic structural diagram of a terminal device according to an embodiment of this application;
FIG. 17 is a schematic structural diagram of a mobility management network element according to an embodiment of this application;
FIG. 18 is a schematic structural diagram of a base station according to an embodiment of this application;
FIG. 19 is a schematic flowchart of a fourth paging processing method according to an embodiment of this application;
FIG. 20A and FIG. 20B are a schematic flowchart of the method according to a specific embodiment 5 of this application;
FIG. 21 is a schematic structural diagram of a paging processing apparatus according to an embodiment of this application;
FIG. 22 is a schematic structural diagram of a paging processing apparatus according to an embodiment of this application;
FIG. 23 is a schematic structural diagram of a terminal device according to an embodiment of this application; and
FIG. 24 is a schematic structural diagram of a first network device according to an embodiment of this application.

### DESCRIPTION OF EMBODIMENTS

In the prior art, a terminal device cannot distinguish whether a paging message is sent by a false network or a real base station, and normally responds to any received paging message. When the paging message received by the terminal device carries an international mobile subscriber identity (international mobile subscriber identity, IMSI), the terminal device first performs local registration, and then reattaches to a network. When the paging message received by the terminal device carries a temporary mobile user identity (temporary international mobile subscriber identity, S-TMSI), the terminal device initiates a service (service) procedure to a mobility management network element.

When the false network frequently sends paging messages each carrying an IMSI to the terminal device, the terminal device frequently performs local deregistration and reattaches to the network. Consequently, a user cannot obtain a normal service. When the false network frequently sends paging messages each carrying an S-TMSI to the terminal device, the terminal device frequently switches between an idle mode and a connected mode. Therefore, power consumption of the terminal device is increased, a battery life of the terminal device is reduced, and user experience is affected.

To resolve the foregoing problems in the prior art, this application provides a paging processing method and apparatus. The method and the apparatus in this application are based on a same inventive concept. The method and the apparatus have similar problem resolving principles. Therefore, for implementation of the apparatus and the method, refer to each other, and details of repeated parts are not described.

The following explains and describes some terms in embodiments of this application, to facilitate understanding of the terms for a person skilled in the art.
(1) An IMSI is an identity for distinguishing between mobile users, and is stored in a subscriber identity module (subscriber identity module, SIM) card or a universal subscriber identity module (universal subscriber identity module, USIM) card. The IMSI includes a mobile country code (MCC), a mobile network code (MNC), and a mobile subscriber identification number (mobile subscriber identification number, MSIN).
   Resources of the MCC are uniformly allocated and managed by the international telecommunication union (international telecommunication union, ITU) worldwide, and are used to uniquely identify a country to which the mobile user belongs. The MNC is used to identify a mobile communication network to which the mobile user belongs. If there are a plurality of public land mobile networks (public land mobile network, PLMN) in a same country, because one operator in a country usually corresponds to one PLMN, MNCs may be used to distinguish between the PLMNs, to be specific, a unique MNC is allocated to each PLMN. The MSIN is used to identify a mobile user in a mobile communication network.
(2) A globally unique temporary identity (global unique temporary identity, GUTI) is allocated by a core network (core network, CN), is used to uniquely identify a terminal device on a network, and may reduce exposure of a private parameter, for example, the IMSI or an IMEI, of a user during network transmission.
(3) A registration request is an attach request (attach request) or a tracking area update request (TAU request) on a fourth-generation (4th-generation, 4G) network, or is a registration request (registration request) on a fifth-generation (5th-generation, 5G) network.
(4) Security protection includes encryption, integrity protection, a combination of encryption and integrity protection, a combination of integrity protection and anti-replay processing, or a combination of encryption, integrity protection, and anti-replay processing. A transmit end or a receive end performs security protection on data based on a security context agreed on by the two parties, so that a peer end performs security verification on the obtained data by using the agreed security context, and performs security verification on the obtained data, to improve data transmission security.
(5) Security verification includes decryption, integrity verification, decryption and integrity verification, integrity verification and anti-replay verification, decryption, integrity verification and anti-replay verification, or the like, is a reverse process of the security protection, and is used to perform security verification on security-protected data.
(6) A location update request is the TAU request on the 4G network or the registration request on the 5G network.
(7) The term "and/or" describes an association relationship between associated objects, and indicates that three relationships may exist. For example, A and/or B may represent the following cases: Only A exists, both A and B exist, and only B exists. The character "/" generally indicates an "or" relationship between the associated objects.

In addition, it should be understood that, in the description of this application, terms such as "first" and "second" are merely used for distinction and description, but cannot be understood as an indication or implication of relative importance, and cannot be understood as an indication or implication of a sequence.

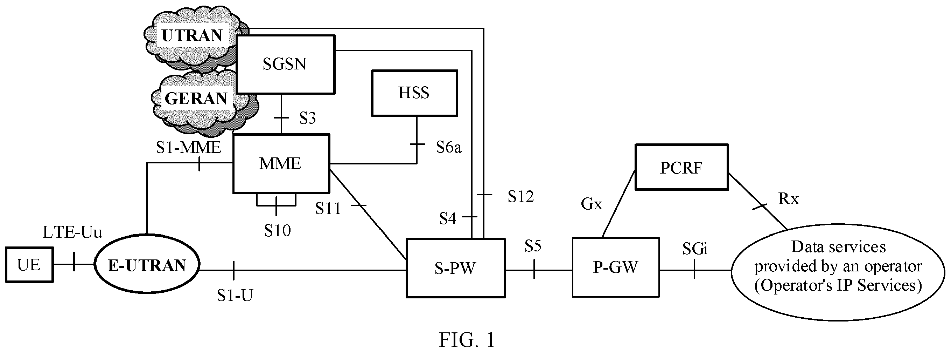

The paging processing method provided in this application is applicable to a 4G network architecture, a 5G network architecture, and a future evolved communications network. FIG. 1 shows a possible network architecture to which this application is applicable, and the network architecture is the 4G network architecture. Network elements in the 4G network architecture include a terminal device and a mobility management entity (mobility management entity, MME). In FIG. 1, an example in which the terminal device is user equipment (user equipment, UE) is used. The network architecture further includes a serving GPRS support node (serving GPRS support node, SGSN), a home subscriber server (home subscriber server, HSS), a serving gateway (serving gateway, S-GW), a packet data network gateway (packet data network gateway, PDN gateway, P-GW), a policy and charging rules function (policy and charging rules function, PCRF) entity, an evolved universal terrestrial radio access network (evolved universal terrestrial radio access network, E-TURAN), and the like.

The E-UTRAN includes a plurality of evolved NodeBs (evolved nodeB, eNodeB). The eNodeBs are interconnected with each other through an X2 interface. The eNodeBs interact with an evolved packet core (evolved packet core, EPC) through an S1 interface. The eNodeBs are interconnected with the UE through long term evolution (long term evolution, LTE)-Uu.

Main functions of the MME are to support non-access stratum (non access stratum, NAS) signaling and security of the signaling, management of a tracking area (track area, TA) list, P-GW and S-GW selection, MME selection for an inter-MME handover, SGSN selection for a handover to a 2G/3G access system, authentication on a user, roaming control, bearer management, and mobility management between core network nodes of different 3rd generation partnership project (3rd generation partnership project, 3GPP) access networks.

The S-GW is a gateway that terminates an interface towards the E-UTRAN. Main functions of the S-GW include: serving as a local anchor point for an inter-base station handover and helping a base station complete a reorder function; serving as a mobility anchor point for a handover between different 3 GPP access systems; performing lawful interception, packet routing and forwarding, transport level packet marking in an uplink and a downlink, inter-operator charging, and the like.

The P-GW is a gateway that terminates an SGi interface towards a PDN. If the UE accesses a plurality of PDNs, the UE corresponds to one or more P-GWs. Main functions of the P-GW include per-user based packet filtering, lawful interception, internet protocol, UE internet protocol (internet protocol, IP) address allocation, transport level packet marking in the uplink, uplink and downlink service level charging, uplink and downlink service level gating control, service-based control on uplink and downlink rates, and the like.

The HSS is a database for storing user subscription information. A home network may include one or more HSSs. The HSS is responsible for storing user-related information such as a user identity, number and routing information, security information, location information, and profile (Profile) information.

The SGSN may be configured to: perform signaling interaction for mobility between 2G/3G and E-UTRAN 3GPP access networks, perform P-GW and S-GW selection, and perform MME selection for a handover of the user to the E-UTRAN 3GPP access network.

The PCRF terminates an Rx interface and a Gx interface. In a non-roaming scenario, only one PCRF in an HPLMN is associated with one IP-connectivity access network (ip-connectivity access network), IP-CAN session of the UE. In a roaming scenario with local breakout of a traffic flow, two PCRFs may be associated with one IP-CAN session of the UE.

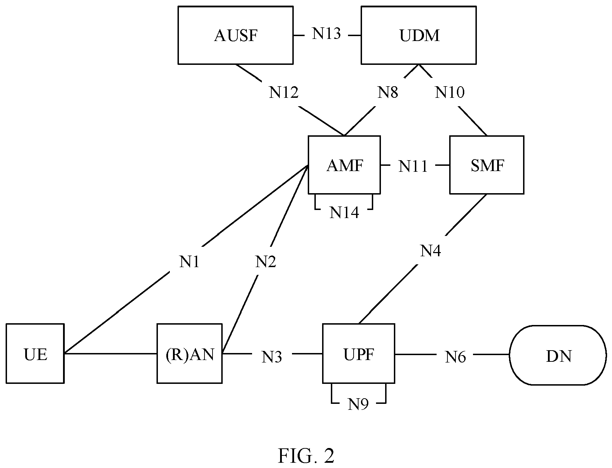

FIG. 2 is a schematic diagram of another possible network architecture to which this application is applicable, and the network architecture is the 5G network architecture. Network elements in the 5G network architecture include a terminal device and an access and mobility management function (access and mobility management function, AMF) entity. In FIG. 2, an example in which the terminal device is UE is used. The network architecture further includes a radio access network (radio access network, RAN), a user plane function (user plane function, UPF) entity, a data network (data network, DN), a session management function (session management function, SMF) entity, an authentication server function entity (authentication server function, AUSF), a unified data management (unified data management, UDM) entity, a policy control function (policy control function, PCF) entity (not shown in FIG. 2), an application function (application function, AF) entity (not shown in FIG. 2), an authentication credential repository and processing function (authentication credential repository and processing function, ARPF) entity (not shown in FIG. 2), and the like.

A main function of the RAN is to control a user to access a mobile communications network in a radio manner. The RAN is a part of a mobile communications system. The RAN implements a radio access technology. Conceptually, the RAN resides between a device (such as a mobile phone, a computer, or any remotely controlled machine), and provides a connection to a core network of the RAN. A RAN device includes but is not limited to: a gNodeB (gNodeB, gNB) in 5G, an eNodeB, a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission reception point (transmitting and receiving point, TRP), a transmission point (transmitting point, TP), a mobile switching center, and the like. In addition, the RAN device may further include a wireless fidelity (wireless fidelity, Wi-Fi) access point (access point, AP) and the like.

The AMF entity is responsible for access management and mobility management of the terminal. During actual application, the AMF entity has a mobility management function of an MME in a network framework in LTE, and an access management function is added.

The SMF entity is responsible for session management, for example, setup of a user session.

The UPF entity is a function network element in a user plane, is mainly responsible for connecting to an external network, and has related functions of a serving gateway (serving gateway, SGW) and a public data network gateway (public data network GateWay, PDN-GW) in LTE.

The DN is responsible for providing a service for the terminal. For example, some DNs provide a network access function for the terminal, and some other DNs provide a text messaging function for the terminal. An SEAF entity is configured to complete an authentication process for the UE. In 5G, a function of the SEAF may be integrated into the AMF entity.

The AUSF entity has an authentication server function, and is configured to terminate an authentication function requested by the SEAF. An AMF network element is responsible for the access management and the mobility management of the terminal. During the actual application, the AMF network element has the mobility management function of the MME in LTE, and the access management function is added.

The ARPF entity has an authentication credential repository and processing function, and is configured to store a long-term authentication credential of the user, for example, a permanent key K. In 5G, the function of the ARPF may be integrated into the UDM entity.

The UDM entity may store subscription information of the user, and implement a backend similar to that of an HSS in 4G.

The terminal device in this application is device having a wireless transceiver function, and may be deployed on land, where the deployment includes indoor or outdoor, or handheld or vehicle-mounted deployment, may be deployed on water (for example, on a ship), or may be deployed in air (for example, on an aerocraft, a balloon, and a satellite). The terminal device may be a mobile phone (mobile phone), a tablet (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in a telemedicine (remote medical), a wireless terminal in a smart grid (smart grid), a wireless terminal in transportation safety (transportation safety), a wireless terminal in a smart city (smart city), a wireless terminal in a smart home (smart home), and the like.

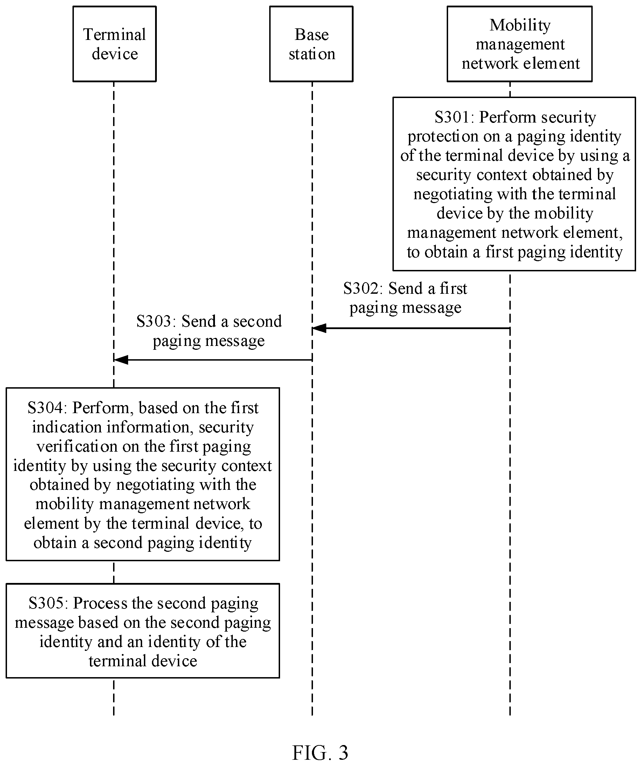

FIG. 3 shows a first paging processing method according to this application. The method is applied to a scenario in which a network side device needs to communicate with a terminal device when the terminal device is in an idle mode, and is applicable to the 4G communications system shown in FIG. 1 and the 5G communications system shown in FIG. 2. The method includes the following steps.

S301: A mobility management network element performs security protection on a paging identity of the terminal device by using a security context obtained by negotiating with the terminal device by the mobility management network element, to obtain a first paging identity.

The paging identity (a paging UE identity or a UE paging identity) of the terminal device may be a permanent paging identity (namely, a constant paging identity) such as an IMSI on a 4G network or a subscription permanent identifier (subscription permanent identifier, SUPI) or a subscription concealed identifier (subscription concealed identifier, SUCI) on a 5G network. Alternatively, the paging identity of the terminal device may be a temporary paging identity allocated by the mobility management network element, for example, an S-TMSI on a 4G network or a 5G-S-TMSI on a 5G network.

It should be noted that the mobility management network element is not limited in this application. The mobility management network element may be an MME on the 4G network, may be an AMF entity on the 5G network, or may be a network element that is in a future communications network and that has a mobility management function.

S302: The mobility management network element sends a first paging message to a base station, where the first paging message includes the paging identity of the terminal device and the first paging identity.

On the 4G network, the base station may be an eNB, a macro base station, a micro base station (also referred to as a "small cell"), a picocell base station, an AP, a TP, a BSC, a BTS, a BBU, an RNC, a home base station, a mobile switching center, or the like. On the 5G network, the base station may be any one of the devices on the 4G network, or may be a gNB, a TRP, or the like. The base station may alternatively be a base station on the future network.

Correspondingly, the base station receives the first paging message sent by the mobility management network element.

S303: The base station sends a second paging message to the terminal device, where the second paging message carries the first paging identity and first indication information, and the first indication information is used to indicate that the first paging identity is a security-protected paging identity.

Correspondingly, the terminal device receives the second paging message.

In a possible implementation, the second paging message carrying the first indication information may alternatively be sent by a false network. When the first paging message is sent by the false network, the first paging identity is obtained by performing security protection on the paging identity of the terminal device by the false network by using a security context (because the false network cannot obtain the security context obtained by negotiating with the mobility management network element by the terminal device, the security context used by the false network is different from the security context obtained by negotiating with the mobility management network element by the terminal device).

S304: The terminal device performs, based on the first indication information, security verification on the first paging identity by using the security context obtained by negotiating with the mobility management network element by the terminal device, to obtain a second paging identity.

S305: The terminal device processes the second paging message based on the second paging identity and an identity of the terminal device.

In a possible implementation, the terminal device may further receive a third paging message. The third paging message does not carry the first indication information. Alternatively, the third paging message carries a third paging identity and second indication information, and the second indication information is used to indicate that the third paging identity is in plaintext. The terminal device ignores the second paging message.

Security protection is usually not performed on a paging identity carried in a paging message sent by the false network, and the paging message does not carry the first indication information. That is, the paging message sent by the false network is usually the third paging message. Therefore, the terminal device ignores the third paging message, so that a paging attack from the false network on the terminal device can be avoided, and the terminal device can successfully communicate with a real base station.

In a possible implementation, before performing step S301, the mobility management network element further needs to determine that the terminal device supports a paging message carrying a security-protected paging identity, and sends, to the terminal device, indication information for indicating that the mobility management network element supports the paging message carrying the security-protected paging identity, so that the terminal device can determine, based on the indication information sent by the mobility management network element, that the mobility management network element supports the paging message carrying the security-protected paging identity.

A method for determining, by the mobility management network element and the terminal device, that the opposite party supports the paging message carrying the security-protected paging identity specifically includes the following steps.
i. The terminal device sends a registration request to the mobility management network element, where the registration request carries third indication information, and the third indication information is used to indicate that the terminal device supports the paging message carrying the security-protected paging identity.
   Correspondingly, the mobility management network element receives the registration request sent by the terminal device.
   On the 4G network, the registration request may be an attach request (attach request) or a tracking area update request (TAU request, where TAU is short for trace area update). On the 5G network, the registration request is a registration request.
   It should be noted that a specific format of the third indication information in the registration request is not limited in this embodiment of this application. The third indication information may be carried in a reserved item of an existing information element in the registration request. For example, when the registration request is an attach request, the third indication information may be carried in a reserved item of a UE network capability information element. Alternatively, the third indication information may be carried in a new information element in the registration request.
ii. The mobility management network element determines, based on the registration request, that the terminal device supports the paging message carrying the security-protected paging identity.
iii. The mobility management network element sends a registration accept message to the terminal device, where the registration accept message carries fourth indication information, the fourth indication information is used to indicate that the mobility management network element supports the paging message carrying the security-protected paging identity, and the registration accept message is a response message for the registration request.
   Correspondingly, the terminal device receives the registration accept message sent by the mobility management network element.
   When the registration request is an attach request, the registration accept message is an attach accept (attach accept) message. When the registration request is a TAU request, the registration accept message is a TAU accept (TAU accept) message. When the registration request is a registration request, the registration accept message is a registration accept message.
   It should be noted that a specific format of the fourth indication information in the registration request is not limited in this embodiment of this application. The fourth indication information may be carried in a reserved item of an existing information element in the registration accept message. For example, when the registration request is an attach accept, the fourth indication information may be carried in a reserved item of an EPS network feature support information element. Alternatively, the fourth indication information may be carried in a new information element in the registration accept message.
iv. The terminal device determines, based on the fourth indication information, that the mobility management network element supports the paging message carrying the security-protected paging identity.

In a possible implementation, when performing step 301, the mobility management network element may perform security protection on the paging identity of the terminal device in but not limited to the following five manners:
Manner a: The mobility management network element encrypts the paging identity of the terminal device by using the security context obtained by negotiating with the terminal device by the mobility management network element.
Manner b: The mobility management network element performs integrity protection on the paging identity of the terminal device by using the security context obtained by negotiating with the terminal device by the mobility management network element.
Manner c: The mobility management network element encrypts the paging identity of the terminal device, and then performs integrity protection on the encrypted paging identity by using the security context obtained by negotiating with the terminal device by the mobility management network element.
Manner d: The mobility management network element performs integrity protection on the paging identity of the terminal device, and performs anti-replay processing on the integrity-protected paging identity by using the security context obtained by negotiating with the terminal device by the mobility management network element.
Manner e: The mobility management network element encrypts the paging identity of the terminal device, then performs integrity protection on the encrypted paging identity, and performs anti-replay processing on the integrity-protected paging identity by using the security context obtained by negotiating with the terminal device by the mobility management network element.

In the foregoing five manners, the security context includes a key and a corresponding encryption algorithm that are required for performing encryption and/or integrity protection on the paging identity of the terminal device.

Correspondingly, when performing step 304, the terminal device may perform security verification on the first paging identity in, but not limited to, the following manners, to obtain the second paging identity:
Manner A: When the mobility management network element performs security protection on the paging identity of the terminal device in the manner a, the terminal device decrypts the first paging identity by using the security context agreed on by the terminal device and the mobility management network element, to obtain the second paging identity.
Manner B: When the mobility management network element performs security protection on the paging identity of the terminal device in the manner b, the terminal device performs integrity verification on the first paging identity by using the security context agreed on by the terminal device and the mobility management network element, to obtain the second paging identity.
Manner C: When the mobility management network element performs security protection on the paging identity of the terminal device in the manner c, the terminal device performs integrity verification and decryption on the first paging identity by using the security context agreed on by the terminal device and the mobility management network element, to obtain the second paging identity.
Manner D: When the mobility management network element performs security protection on the paging identity of the terminal device in the manner d, the terminal device performs integrity verification on the first paging identity, to obtain the second paging identity, and performs anti-replay verification on the second paging identity by using the security context agreed on by the terminal device and the mobility management network element.
Manner E: When the mobility management network element performs security protection on the paging identity of the terminal device in the manner e, the terminal device performs integrity verification and decryption on the first paging identity, to obtain the second paging identity, and performs anti-replay verification on the second paging identity by using the security context agreed on by the terminal device and the mobility management network element.

In a specific implementation, when performing step 305, the terminal device may process the first paging message in any one of the following specific manners.

Manner 1: When determining that the second paging identity is consistent with the identity of the terminal device, that is, when determining that the second paging message is a paging message sent by the real base station, the terminal device responds to the second paging message.

Specifically, when the second paging identity is a permanent paging identity, and the second paging identity is consistent with the identity of the terminal device, the terminal device performs local registration, and performs a registration procedure again. When the second paging identity is a temporary paging identity, and the second paging identity is consistent with the identity of the terminal device, the terminal device sends a service request (service request) to the mobility management network element, to complete a service procedure.

Manner 2: When determining that the second paging identity is inconsistent with the identity of the terminal device, that is, when determining that the second paging message is not a paging message sent by the real base station, the terminal device ignores the second paging message.

Specifically, when determining that the second paging identity is inconsistent with the identity of the terminal device, the terminal device may not respond to the second paging message, or may directly discard the second paging message.

The false network cannot obtain the security context obtained by negotiating with the mobility management network element by the terminal device. Therefore, the terminal device responds to the second paging message when the second paging identity is consistent with the identity of the terminal device, or ignores the second paging message when the second paging identity is inconsistent with the identity of the terminal device, so that the paging attack from the false network on the terminal device can be effectively avoided.

In this embodiment of this application, when receiving the second paging message carrying the first indication information, the terminal device performs security verification on the first paging identity in the second paging message by using the security context obtained by negotiating with the mobility management network element by the terminal device, to obtain the second paging identity. The terminal device processes the second paging message based on the second paging identity and the identity of the terminal device. The terminal device responds to the second paging message only when the second paging identity is consistent with the identity of the terminal device; otherwise, the terminal device ignores the paging message, instead of responding upon receiving the paging message. Therefore, the paging attack from the false network on the terminal device can be avoided.

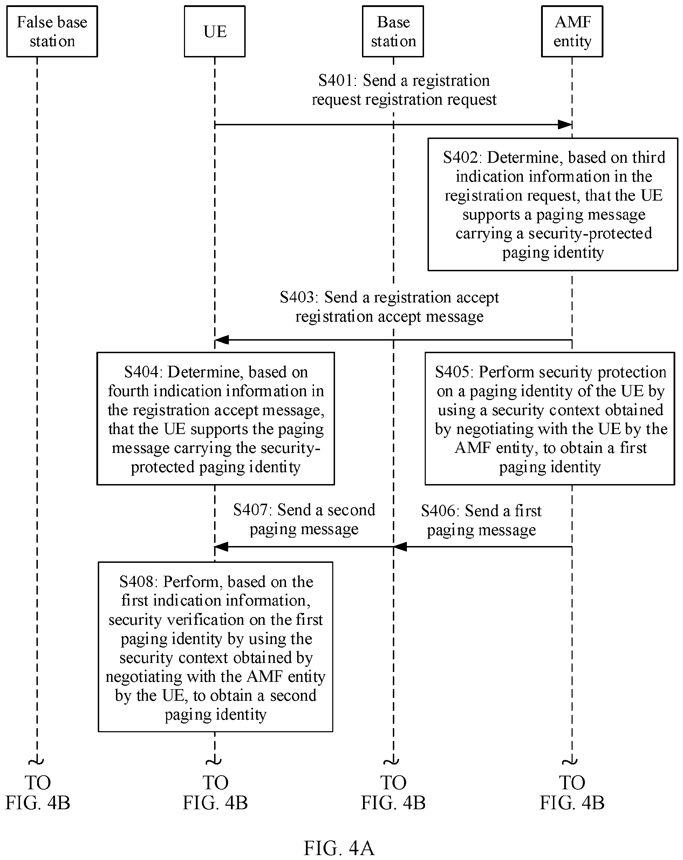

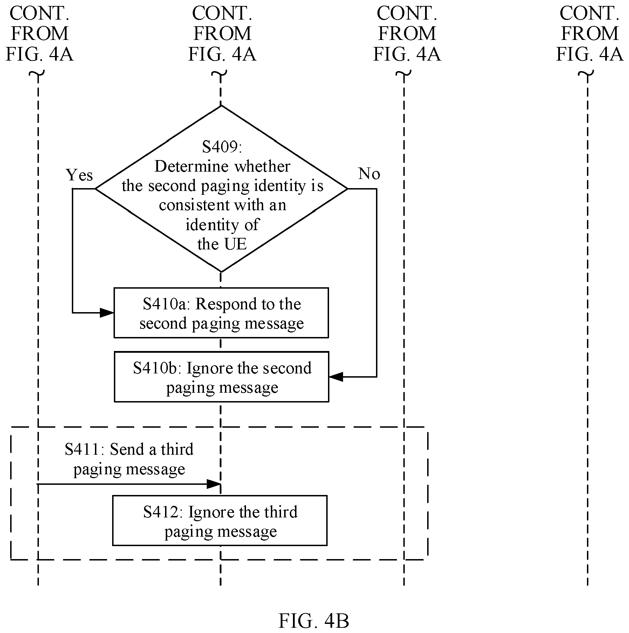

The following describes in detail, by using a specific embodiment 1, a scenario in which the first paging processing method provided in this embodiment of this application is applied to the 5G network. The mobility management network element is an AMF entity, and that the terminal device is UE is used as an example. As shown in FIG. 4A and FIG. 4B, the method includes the following steps.

S401: The UE sends a registration request to the AMF entity, where the registration request carries third indication information, and the third indication information is used to indicate that the UE supports a paging message carrying a security-protected paging identity.

Correspondingly, the AMF entity receives the registration request.

S402: The AMF entity determines, based on the third indication information in the registration request, that the UE supports the paging message carrying the security-protected paging identity.

S403: The AMF entity sends a registration accept message to the UE, where the registration accept message carries fourth indication information, and the fourth indication information is used to indicate that the AMF entity supports the paging message carrying the security-protected paging identity.

Correspondingly, the UE receives the registration accept message.

Optionally, after receiving the registration accept message, the UE may further send a registration complete (registration complete) message to the AMF entity.

S404: The UE determines, based on the fourth indication information in the registration accept, that the AMF entity supports the paging message carrying the security-protected paging identity.

According to the foregoing steps S401 to S404, the UE determines that the AMF entity supports the paging message carrying the security-protected paging identity, and the AMF entity determines that the UE supports the paging message carrying the security-protected paging identity, so that the AMF entity can page the UE by using the paging message carrying the security-protected paging identity.

S405: When determining that the AMF entity needs to communicate with the UE, the AMF entity performs security protection on a paging identity of the UE by using a security context obtained by negotiating with the UE by the AMF entity, to obtain a first paging identity.

S406: The AMF entity sends a first paging message to a base station, where the first paging message includes the paging identity of the UE and the first paging identity.

Correspondingly, the base station receives the first paging message.

S407: The base station sends a second paging message to the UE, where the second paging message carries the first paging identity and first indication information, and the first indication information is used to indicate that the first paging identity is a security-protected paging identity.

Correspondingly, the UE receives the second paging message.

S408: The UE performs, based on the first indication information, security verification on the first paging identity by using the security context obtained by negotiating with the AMF entity by the UE, to obtain a second paging identity.

S409: The UE determines whether the second paging identity is consistent with an identity of the UE; and if the second paging identity is consistent with the identity of the UE, performs S410a; otherwise, performs S410b.

S410a: The UE responds to the second paging message.

S410b: The UE ignores the second paging message.

Optionally, after performing S404, the UE may further directly perform step S411: A false network sends a third paging message to the UE, where the third paging message does not carry the first indication information. After receiving the third paging message, the UE directly performs S412: Ignore the third paging message.

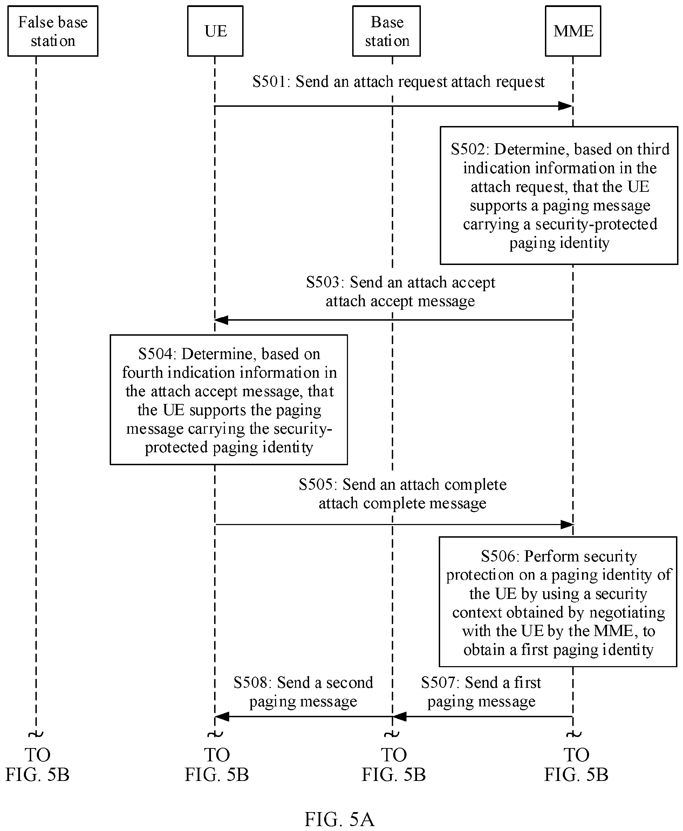

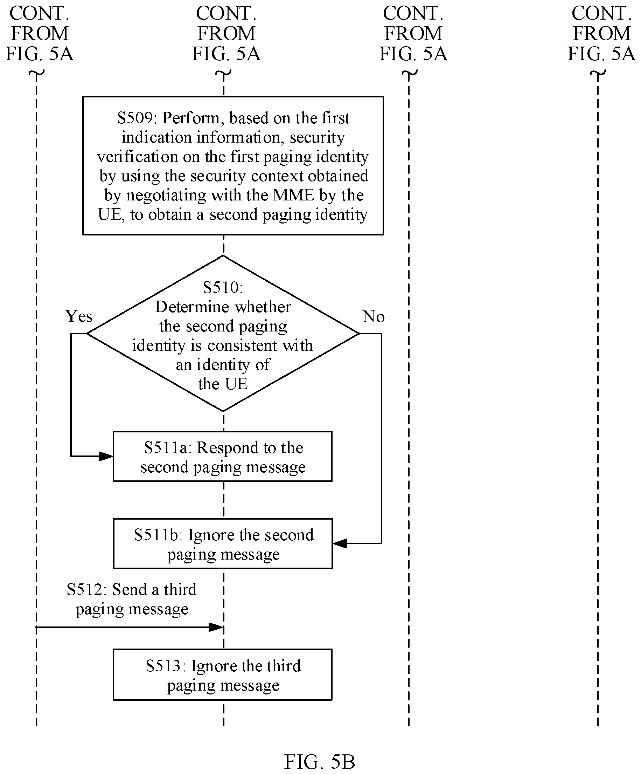

The following describes in detail, by using a specific embodiment 2, a scenario in which the first paging processing method provided in this embodiment of this application is applied to the 4G network. The mobility management network element is an MME, that the terminal device is UE is used as an example, and that a registration request sent by the UE is an attach request is used as an example. As shown in FIG. 5A and FIG. 5B, the method includes the following steps.

S501: The UE sends the attach request to the MME, where the attach request carries third indication information, and the third indication information is used to indicate that the UE supports a paging message carrying a security-protected paging identity.

Correspondingly, the MME receives the attach request.

S502: The MME determines, based on the third indication information in the attach request, that the UE supports the paging message carrying the security-protected paging identity.

S503: The MME sends an attach accept message to the UE, where the attach accept message carries fourth indication information, and the fourth indication information is used to indicate that the MME supports the paging message carrying the security-protected paging identity.

Correspondingly, the UE receives the attach accept message sent by the MME

S504: The UE determines, based on the fourth indication information in the attach accept message, that the MME supports the paging message carrying the security-protected paging identity.

According to the foregoing steps S501 to S504, the UE determines that the MME supports the paging message carrying the security-protected paging identity, and the MME determines that the UE supports the paging message carrying the security-protected paging identity, so that the MME can page the UE by using the paging message carrying the security-protected paging identity.

S505: The UE sends an attach complete message to the MME.

Correspondingly, the MME receives the attach complete message.

S506: When determining that the MME needs to communicate with the UE, the MME performs security protection on a paging identity of the UE by using a security context obtained by negotiating with the UE by the MME, to obtain a first paging identity.

The paging identity of the UE may be an IMSI or an S-TMSI.

S507: The MME sends a first paging message to a base station, where the first paging message includes the paging identity of the UE and the first paging identity.

S508: The base station sends a second paging message to the UE, where the second paging message carries the first paging identity and first indication information, and the first indication information is used to indicate that the first paging identity is a security-protected paging identity.

Correspondingly, the UE receives the second paging message.

S509: The UE performs, based on the first indication information, security verification on the first paging identity by using the security context obtained by negotiating with the MME by the UE, to obtain a second paging identity.

S510: The UE determines whether the second paging identity is consistent with an identity of the UE; and if the second paging identity is consistent with the identity of the UE, performs S511a; otherwise, performs S511b.

S511a: The UE responds to the second paging message.

S511b: The UE ignores the second paging message.

Optionally, after performing S504, the UE may further directly perform step S512: A false network sends a third paging message to the UE, where the third paging message does not carry the first indication information. After receiving the third paging message, the UE directly performs S513: Ignore the third paging message.

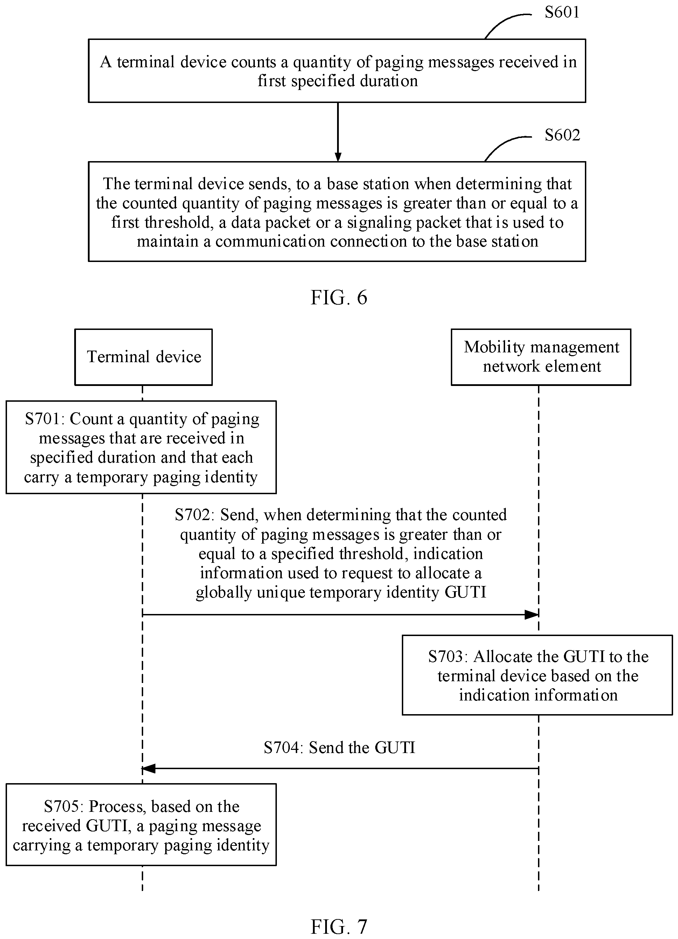

FIG. 6 shows a second paging processing method according to this application. The method may be applied to a scenario in which a network side device needs to communicate with a terminal device when the terminal device is in an idle mode. The method includes the following steps.

S601: The terminal device counts a quantity of paging messages received in first specified duration.

S602: The terminal device sends, to a base station when determining that the counted quantity of paging messages is greater than or equal to a first threshold, a data packet or a signaling packet that is used to maintain a communication connection to the base station.

The communication connection may be a signaling connection used to transmit signaling, or may be a data connection used to transmit a data packet.

In a possible implementation, when the terminal device receives the paging message, and determines that the counted quantity of paging messages is less than the first threshold, the terminal device responds to the paging message. For example, when the paging message received by the terminal device carries an IMSI, and the terminal device determines that the counted quantity of paging messages is less than the first threshold, the terminal device performs local registration, and performs an attach procedure again. For another example, when the paging message received by the terminal device carries an S-TMSI, and the terminal device determines that the counted quantity of paging message is less than the first threshold, the terminal device sends a service request to an MME, to perform a service procedure.

In a possible implementation, the terminal device may determine, in, but not limited to, any one of the following several manners, that the counted quantity of paging messages is greater than or equal to the first threshold:
Manner 1: When the paging message carries a permanent paging identity, that is, the paging message is a first-type paging message, the terminal device counts a quantity of first-type paging messages that are received, and determines that the counted quantity of first-type paging messages is greater than or equal to the first threshold.
Manner 2: When the paging message carries a temporary paging identity, that is, the paging message is a second-type paging message, the terminal device counts a quantity of second-type paging messages that are received, and determines that the counted quantity of second-type paging messages is greater than or equal to the first threshold.
Manner 3: When the paging messages includes a first-type paging message and a second-type paging message, the terminal device may separately count a quantity of first-type paging messages that are received and a quantity of second-type paging messages that are received, and determine that the counted quantity of first-type paging messages is greater than or equal to the first threshold and the quantity of second-type paging messages is greater than or equal to the first threshold; or the terminal device may count a sum of a quantity of first-type paging messages that are received and a quantity of second-type paging messages that are received, and determine that the counted sum of the quantities of paging messages is greater than or equal to the first threshold.
Manner 4: The terminal device separately counts quantities of paging messages received from different base stations in the first specified duration, and determines that a quantity of paging messages received from any base station is greater than or equal to the first threshold.

In a specific implementation, the terminal device sends, to the base station by using the following step, the data packet or the signaling packet that is used to maintain the communication connection to the base station: sending, by the terminal device to the base station in second specified duration based on a specified periodicity, the data packet or the signaling packet that is used to maintain the communication connection to the base station, where the specified periodicity is less than a second threshold, and the second threshold is duration for maintaining the communication connection between the terminal device and the base station. For example, the second threshold may be timing duration, specified in a protocol, of a UE inactivity timer of the base station.

The terminal device sends, to the base station based on the specified periodicity, the data packet or the signaling packet that is used to maintain the communication connection to the base station, so that the terminal device is in a connected mode in the second duration. The terminal device does not respond to a paging message when the terminal device is in the connected mode. Therefore, a paging attack from a false network on the terminal device can be avoided.

In this embodiment of this application, the terminal device counts the quantity of paging messages received in the first specified duration, and sends, to the base station when determining that the counted quantity of paging messages is greater than or equal to the first threshold, the data packet or the signaling packet that is used to maintain the communication connection to the base station, so that the terminal device is in the connected mode. However, the terminal device does not respond to the paging message when the terminal device is in the connected mode. Therefore, when the false network frequently sends paging messages to the terminal device, the terminal device does not respond to the paging messages, so that the paging attack from the false network on the terminal device can be avoided.

FIG. 7 shows a third paging processing method according to this application. The method may be applied to a scenario in which a network side device needs to communicate with a terminal device when the terminal device is in an idle mode. The method includes the following steps.

S701: The terminal device counts a quantity of paging messages that are received in specified duration and that each carry a temporary paging identity.

Specifically, after a specified paging count timer is started, the terminal device may count a quantity of paging messages that are received in timing duration corresponding to the paging count timer and that each carry the temporary paging identity. The timing duration corresponding to the paging count timer is the specified duration. The terminal device may start the paging count timer when receiving the 1st paging message carrying the temporary paging identity, or start the paging count timer based on a preset periodicity.

S702: The terminal device sends, to a mobility management network element when determining that the counted quantity of paging messages is greater than or equal to a specified threshold, indication information used to request to allocate a globally unique temporary identity GUTI.

Correspondingly, the mobility management network element receives the indication information that is sent by the terminal device and that is used to request to allocate the globally unique temporary identity GUTI.

S703: The mobility management network element allocates the GUTI to the terminal device based on the indication information.

The GUTI allocated by the mobility management network element to the terminal device is different from a temporary paging identity carried in a paging message currently received by the terminal device.

S704: The mobility management network element sends the GUTI to the terminal device.

Correspondingly, the terminal device receives the GUTI sent by the mobility management network element.

S705: The terminal device processes, based on the received GUTI, a paging message carrying a temporary paging identity.

In a possible implementation, when the terminal device receives the paging message carrying the temporary paging identity, and determines that the counted quantity of paging messages is less than the specified threshold, the terminal device responds to the paging message. For example, when the paging message received by the terminal device carries an S-TMSI, and the terminal device determines that the counted quantity of paging message is less than the specified threshold, the terminal device sends a service request to an MME, to perform a service procedure.

In a possible implementation, in steps S702 to S704, the terminal device may obtain, in but not limited to any one of the following manners, the indication information that is sent by the mobility management network element and that is used to request to allocate the GUTI:
Manner 1: The terminal device sends a location update request to the mobility management network element, where the location update request carries the indication information used to request to allocate the GUTI. After receiving the location update request, the mobility management network element sends a location update accept message to the terminal device, where the location update accept message carries the allocated GUTI. The terminal device receives the location update accept message, and obtaining, from the location update accept message, the GUTI allocated by the mobility management network element to the terminal device.

On a 4G network, the location update request is a TAU request, and the corresponding location update accept message is a TAU accept message. On a 5G network, the location update request is a registration request, and the corresponding location update accept message is a registration accept message.

It should be noted that a specific manner of carrying the indication information used to request to allocate the GUTI in the location update request and a specific manner of carrying the GUTI allocated by the mobility management network element in the location update accept message are not limited in this embodiment of this application. The indication information used to request to allocate the GUTI may be carried in a reserved item of an existing information element in the location update request. For example, the indication information used to request to allocate the GUTI is carried in an EPS update type (EPS update type) information element in the TAU request. Alternatively, the indication information used to request to allocate the GUTI may be carried in a new information element in the location update request. When there is an existing information element that is in the location update accept message and that is used to carry the GUTI, the GUTI allocated by the mobility management network element may be carried in the existing information element in the location update accept message, for example, a GUTI information element in the TAU accept message or a 5G GUTI information element in the registration accept message. When there is no existing information element that is in the location update accept message and that is used to carry the GUTI, the GUTI allocated by the mobility management network element may be carried in a reserved item of the existing information element in the location update accept message, or the GUTI allocated by the mobility management network element may be carried in a new information element in the location update accept message.

Manner 2: The mobility management network element sends a GUTI reallocation (GUTI reallocation command) message to the terminal device, where the GUTI reallocation message carries the GUTI.

Correspondingly, the terminal device receives the GUTI reallocation message sent by the mobility management network element, and obtains, from the GUTI reallocation message, the GUTI allocated by the mobility management network element to the terminal device.

Manner 3: The mobility management network element sends a configuration update (generic UE configuration update) message to the terminal device, where the configuration update message carries the GUTI.

Correspondingly, the terminal device receives the configuration update message sent by the mobility management network element, and obtains, from the configuration update message, the GUTI allocated by the mobility management network element to the terminal device.

In a possible implementation, in step S705, that the terminal device processes, based on the received GUTI, a paging message carrying a temporary paging identity specifically includes: determining, by the terminal device, a current temporary paging identity of the terminal device based on the received GUTI; and when the temporary paging identity carried in the paging message received by the terminal device is consistent with the current temporary paging identity of the terminal device, responding, by the terminal device, to the paging message; or when the temporary paging identity carried in the paging message received by the terminal device is inconsistent with the current temporary paging identity of the terminal device, ignoring, by the terminal device, the paging message.

Specifically, when the temporary paging identity carried in the paging message received by the terminal device is inconsistent with the current temporary paging identity of the terminal device, the terminal device does not respond to the paging message, or directly discards the paging message.

In this embodiment of this application, the terminal device counts the quantity of paging messages that are received in the specified duration and that each carry the temporary paging identity, and sends, to the mobility management network element when determining that the counted quantity of paging messages is greater than or equal to the specified threshold, the indication information used to request to allocate the globally unique temporary identity GUTI. After receiving the indication information, the mobility management network element allocates the GUTI to the terminal device based on the indication information, and sends the allocated GUTI to the terminal device. The terminal device processes, based on the GUTI allocated by the mobile network element, the paging message carrying the temporary paging identity. A false network cannot obtain the GUTI allocated by the mobility management network element to the terminal device based on the indication information. That is, a paging message sent by the false network to the terminal device does not carry a paging identity corresponding to the new GUTI allocated by the mobility management network element to the terminal device. Therefore, after the terminal device obtains the new GUTI allocated by the mobility management network element to the terminal device, the terminal device does not respond to the paging message sent by the false network, so that a paging attack from the false network on the terminal device can be avoided.

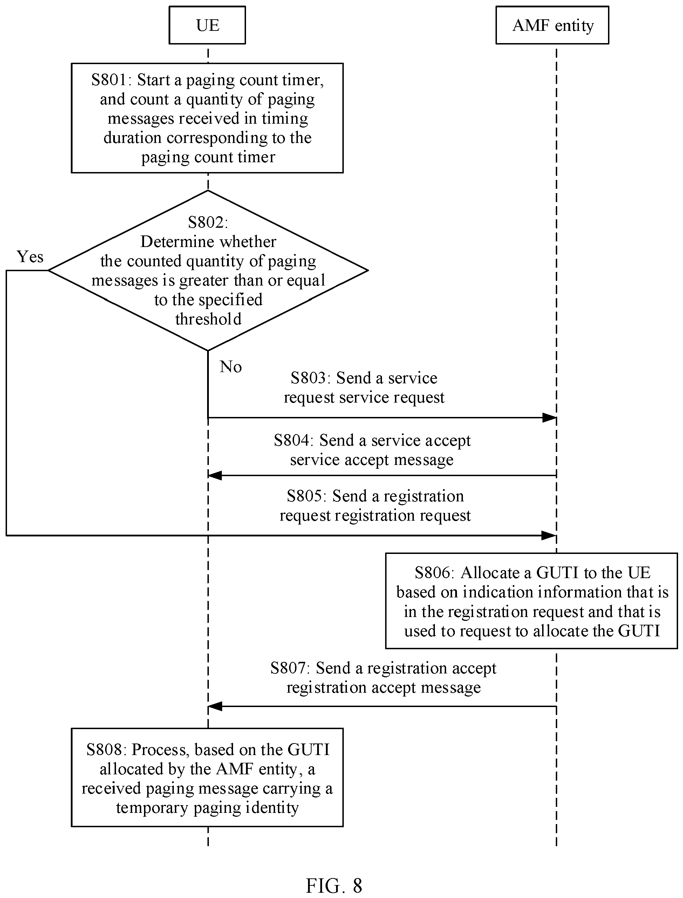

The following describes in detail, by using a specific embodiment 3, a scenario in which the third paging processing method provided in this embodiment of this application is applied to the 5G network. The mobility management network element is an AMF entity, and that the terminal device is UE is used as an example. As shown in FIG. 8, the method includes the following steps.

S801: The UE starts a paging count timer, and counts a quantity of paging messages received in timing duration corresponding to the paging count timer, where the paging message carries a temporary paging identity.

S802: The UE determines whether the counted quantity of paging messages is greater than or equal to the specified threshold; and if no, performs step 803; otherwise, performs S805.

S803: The UE sends a service request to the AMF entity.

S804: After receiving the service request, the AMF entity sends a service accept (service accept) message to the UE, to complete a service procedure.

S805: The UE sends a registration request to the AMF entity, where the registration request carries indication information used to request to allocate a GUTI.

S806: The AMF entity allocates the GUTI to the UE based on the indication information that is in the registration request and that is used to request to allocate the GUTI.

S807: The AMF entity sends a registration accept message to the UE, where the registration accept message carries the GUTI allocated by the AMF entity.

S808: After receiving the registration accept message, the UE processes, based on the GUTI allocated by the AMF entity, a received paging message carrying a temporary paging identity.

After receiving the registration accept message, the UE may further send a registration complete message to the AMF entity.

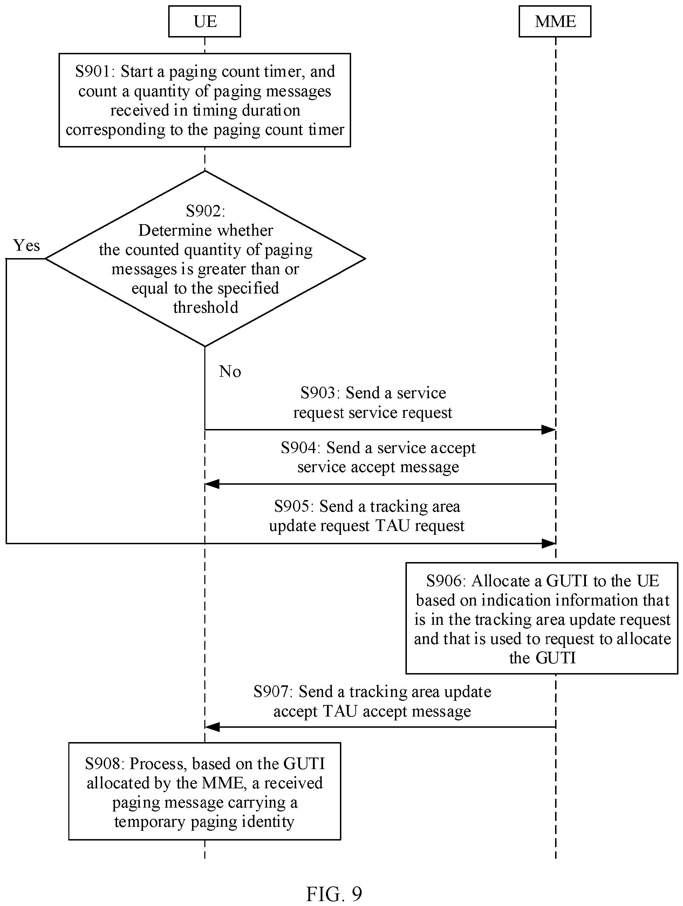

The following describes in detail, by using a specific embodiment 4, a scenario in which the third paging processing method provided in this embodiment of this application is applied to the 4G network. The mobility management network element is an MME, and that the terminal device is UE is used as an example. As shown in FIG. 9, the method includes the following steps.

S901: The UE starts a paging count timer, and counts a quantity of paging messages received in timing duration corresponding to the paging count timer, where the paging message carries an S-TMSI.

S902: The UE determines whether the counted quantity of paging messages is greater than or equal to the specified threshold; and if no, performs step 903; otherwise, performs S905.

S903: The UE sends a service request to the MME

S904: After receiving the service request, the MME sends a service accept message to the UE, to complete a service procedure.

S905: The UE sends a TAU request to the MME, where the TAU request carries indication information used to request to allocate a GUTI.

S906: After receiving the TAU request, the MME allocates the GUTI to the UE based on the indication information that is in the TAU request and that is used to request to allocate the GUTI.

S907: The MME sends a TAU accept message to the UE, where the TAU accept message carries the GUTI allocated by the MME

S908: After receiving the TAU accept message, the UE processes, based on the GUTI allocated by the MME, a received paging message carrying an S-TMSI.

After receiving the TAU accept message, the UE may further send a tracking area update complete (TAU complete) message to the MME

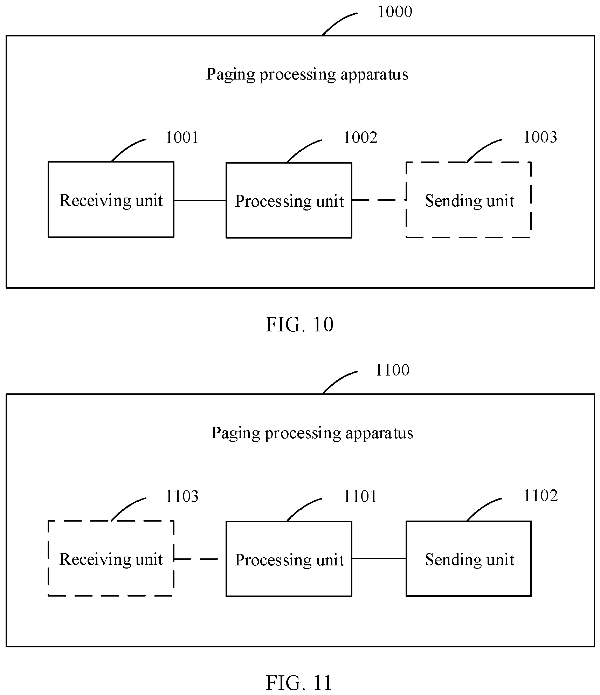

An embodiment of this application provides a paging processing apparatus. The terminal device is configured to implement functions of the terminal device in the paging processing method shown in FIG. 3 to FIG. 5B. As shown in FIG. 10, the terminal device 1000 includes a receiving unit 1001 and a processing unit 1002.

The receiving unit 1001 is configured to receive a first paging message, where the first paging message carries a first paging identity and first indication information, and the first indication information is used to indicate that the first paging identity is a security-protected paging identity.

The processing unit 1002 is configured to perform, based on the first indication information, security verification on the first paging identity by using a security context obtained by negotiating with a mobility management network element by the terminal device, to obtain a second paging identity; and process the first paging message based on the second paging identity and an identity of the terminal device.

In a possible implementation, the processing unit 1002 is specifically configured to respond to the first paging message when determining that the second paging identity is consistent with the identity of the terminal device; or ignore the first paging message when determining that the second paging identity is inconsistent with the identity of the terminal device.

In a possible implementation, the receiving unit 1001 is further configured to receive a second paging message, where the second paging message does not carry the first indication information. The processing unit 1002 is further configured to ignore the second paging message.

Alternatively, the receiving unit 1001 is further configured to receive a second paging message, where the second paging message carries a third paging identity and second indication information, and the second indication information is used to indicate that the third paging identity is in plaintext. The processing unit 1002 is further configured to ignore the second paging message.

In a possible implementation, before the receiving unit 1001 receives the first paging message, the processing unit 1002 is further configured to determine that the mobility management network element supports a paging message carrying a security-protected paging identity.

In a possible implementation, the paging processing apparatus 1000 further includes a sending unit 1003, configured to send a registration request to the mobility management network element, where the registration request carries third indication information, and the third indication information is used to indicate that the terminal device supports the paging message carrying the security-protected paging identity.

The receiving unit 1001 is further configured to receive a registration accept message sent by the mobility management network element, where the registration accept message carries fourth indication information, and the fourth indication information is used to indicate that the mobility management network element supports the paging message carrying the security-protected paging identity.

The processing unit 1002 is specifically configured to determine, based on the fourth indication information, that the mobility management network element supports the paging message carrying the security-protected paging identity.

An entity device corresponding to the receiving unit 1001 may be a receiver, an entity device corresponding to the processing unit 1002 may be a processor, and an entity device corresponding to the sending unit 1003 may be a transmitter.

This embodiment of this application provides the paging processing apparatus. When receiving the second paging message carrying the first indication information, the paging processing apparatus can perform security verification on the first paging identity in the second paging message by using the security context obtained by negotiating with the mobility management network element by the paging processing apparatus, to obtain the second paging identity. The paging processing apparatus processes the second paging message based on the second paging identity and the identity of the terminal device. The paging processing apparatus responds to the second paging message only when the second paging identity is consistent with the identity of the terminal device; otherwise, the paging processing apparatus ignores the paging message, instead of responding upon receiving the paging message. Therefore, a paging attack from a false network on the paging processing apparatus can be avoided.

An embodiment of this application provides a paging processing apparatus. The paging processing apparatus is configured to implement the paging processing method shown in FIG. 3 to FIG. 5B. As shown in FIG. 11, the paging processing apparatus 1100 includes a processing unit 1101 and a sending unit 1102.

The processing unit 1101 is configured to perform security protection on a paging identity of a terminal device by using a security context obtained by negotiating with the terminal device by the paging processing apparatus, to obtain a security-protected paging identity.

The sending unit 1102 is configured to send a paging message to a base station, where the paging message includes the paging identity of the terminal device and the security-protected paging identity.

In a possible implementation, before performing security protection on the paging identity of the terminal device by using the security context obtained by negotiating with the terminal device by the mobility management network element, the processing unit 1101 is further configured to determine that the terminal device supports a paging message carrying a security-protected paging identity.

The sending unit 1102 is further configured to send, to the terminal device, indication information for indicating that the mobility management network element supports the paging message carrying the security-protected paging identity.

In a possible implementation, the paging processing apparatus 1100 further includes a receiving unit 1103, configured to receive a registration request sent by the terminal device, where the registration request carries indication information for indicating that the terminal device supports the paging message carrying the security-protected paging identity.

The processing unit 1101 is specifically configured to determine, based on the indication information carried in the registration request, that the terminal device supports the paging message carrying the security-protected paging identity.

The sending unit 1102 is specifically configured to send a registration accept message to the terminal device, where the registration accept message carries the indication information for indicating that the mobility management network element supports the paging message carrying the security-protected paging identity.

An entity device corresponding to the processing unit 1101 may be a processor, an entity device corresponding to the sending unit 1102 may be a transmitter, and an entity device corresponding to the receiving unit 1103 may be a receiver.

This embodiment of this application provides the paging processing apparatus. The paging processing apparatus can perform security protection on the paging identity of the terminal device by using the security context obtained by negotiating with the terminal device by the paging processing apparatus, to obtain the security-protected paging identity, and sends the paging message to the base station, where the paging message includes the paging identity of the terminal device and the security-protected paging identity. The base station sends, to the terminal device, the paging message carrying the security-protected paging identity, so that after the terminal device receives the paging message sent by the base station, the terminal device performs security verification on the security-protected paging identity in the paging message, processes, based on the paging identity on which security verification is performed and an identity of the terminal device, the paging message sent by the base station; and responds, only when the paging identity on which security verification is performed is consistent with the identity of the terminal device, to the paging message sent by the base station; otherwise, ignores the paging message sent by the base station, instead of responding upon receiving the paging message. Therefore, a paging attack from a false network on the terminal device can be avoided.

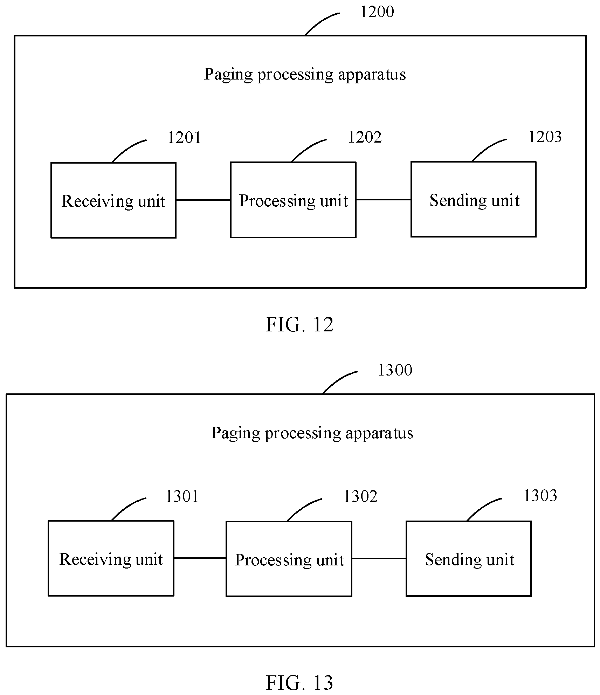

An embodiment of this application provides a paging processing apparatus. The paging processing apparatus is configured to implement the paging processing method shown in FIG. 3 to FIG. 5B. As shown in FIG. 12, the paging processing apparatus 1200 includes a receiving unit 1201, a processing unit 1202, and a sending unit 1203.

The receiving unit 1201 is configured to receive a first paging message sent by a mobility management network element, where the first paging message carries a first paging identity and a second paging identity, the first paging identity is obtained by performing security protection on the second paging identity by the mobility management network element by using a security context obtained by negotiating with a terminal device by the mobility management network element, and the second paging identity is a paging identity of the terminal device.

The processing unit 1202 is configured to determine, based on the second paging identity, the terminal device to be paged by the mobility management network element.

The sending unit 1203 is configured to send a second paging message to the terminal device, where the second paging message carries the first paging identity and first indication information, and the first indication information is used to indicate that the first paging identity is a security-protected paging identity.

An entity device corresponding to the receiving unit 1201 may be a receiver, an entity device corresponding to the processing unit 1202 may be a processor, and an entity device corresponding to the sending unit 1203 may be a transmitter.

This embodiment of this application provides the paging processing apparatus. The paging processing apparatus can receive the first paging message sent by the mobility management network element, where the first paging message carries the first paging identity and the second paging identity; and send the second paging message to the terminal device, where the second paging message carries the first paging identity and the first indication information, and the first indication information is used to indicate that the first paging identity is the security-protected paging identity, so that after the terminal device receives the second paging message, the terminal device performs security verification on the first paging identity in the second paging message, processes the second paging message based on the paging identity on which security verification is performed and an identity of the terminal device; and responds to the second paging message only when the paging identity on which security verification is performed is consistent with the identity of the terminal device; otherwise, ignores the second paging message, instead of responding upon receiving the paging message. Therefore, a paging attack from a false network on the terminal device can be avoided.

An embodiment of this application provides a paging processing apparatus. The paging processing apparatus is configured to implement the paging processing method shown in FIG. 6. As shown in FIG. 13, the paging processing apparatus 1300 includes a receiving unit 1301, a processing unit 1302, and a sending unit 1303.

The receiving unit 1301 is configured to receive a paging message.

The processing unit 1302 is configured to: count a quantity of paging messages received in first specified duration; and determine that the counted quantity of paging messages is greater than or equal to a first threshold.

The sending unit 1303 is configured to: when the processing unit 1302 determines that the counted quantity of paging messages is greater than or equal to the first threshold, send, to a base station, a data packet or a signaling packet that is used to maintain a communication connection to the base station.

In a possible implementation, the sending unit 1302 is specifically configured to send, to the base station in second specified duration based on a specified periodicity, the data packet or the signaling packet that is used to maintain the communication connection to the base station, where the specified periodicity is less than a second threshold, and the second threshold is duration for maintaining the communication connection between the terminal device and the base station.

In a possible implementation, the paging message carries a permanent paging identity, or the paging message carries a temporary paging identity.

In a possible implementation, the paging messages include a first-type paging message and a second-type paging message, the first-type paging message carries a permanent paging identity, and the second-type paging message carries a temporary paging identity; and the quantity of paging messages that is counted by the terminal device is a sum of a quantity of first-type paging messages received in the first specified duration and a quantity of second-type paging messages received in the first specified duration.

In a possible implementation, the processing unit 1302 separately counts quantities of paging messages received from different base stations in the first specified duration; and determines that a quantity of paging messages received from any base station is greater than or equal to the first threshold.

An entity device corresponding to the receiving unit 1301 may be a receiver, an entity device corresponding to the processing unit 1302 may be a processor, and an entity device corresponding to the sending unit 1303 may be a transmitter.

This embodiment of this application provides the paging processing apparatus. The paging processing apparatus can count the quantity of paging messages received in the first specified duration, and send, to the base station when determining that the counted quantity of paging messages is greater than or equal to the first threshold, the data packet or the signaling packet that is used to maintain the communication connection to the base station, so that the paging processing apparatus is in a connected mode. The paging processing apparatus does not respond to the paging message when the paging processing apparatus is in the connected mode. Therefore, a paging attack from a false network on the paging processing apparatus can be avoided.

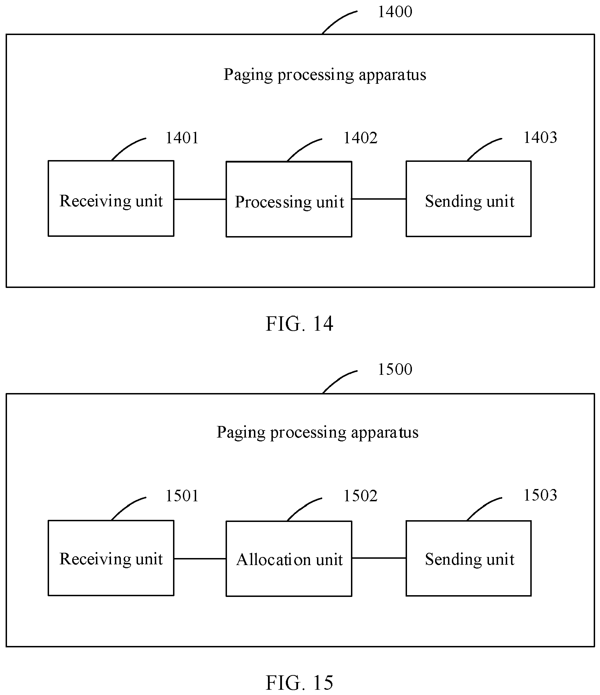

An embodiment of this application provides a paging processing apparatus. The paging processing apparatus is configured to implement functions of the terminal device in the paging processing method shown in FIG. 7 to FIG. 9. As shown in FIG. 14, the paging processing apparatus 1400 includes a receiving unit 1401, a processing unit 1402, and a sending unit 1403.

The receiving unit 1401 is configured to receive a paging message carrying a temporary paging identity.

The processing unit 1402 is configured to: count a quantity of paging messages that are received in specified duration and that each carry the temporary paging identity; and determine that the counted quantity of paging messages is greater than or equal to a specified threshold.

The sending unit 1403 is configured to: when the processing unit 1402 determines that the counted quantity of paging messages is greater than or equal to the specified threshold, send, to a mobility management network element, indication information used to request to allocate a globally unique temporary identity GUTI.

The receiving unit 1401 is further configured to receive the GUTI sent by the mobility management network element.

The processing unit 1402 is further configured to process, based on the GUTI received by the receiving unit 1401, a paging message carrying a temporary paging identity.

In a possible implementation, the sending unit 1403 is specifically configured to send a location update request to the mobility management network element, where the location update request carries the indication information used to request to allocate the GUTI.

The receiving unit 1401 is specifically configured to receive a location update accept message sent by the mobility management network element, where the location update accept message carries the GUTI allocated by the mobility management network element to the terminal device.

In a possible implementation, the receiving unit 1401 is specifically configured to receive a GUTI reallocation message sent by the mobility management network element, where the GUTI reallocation message carries the GUTI allocated by the mobility management network element to the terminal device; or receive a configuration update message sent by the mobility management network element, where the configuration update message carries the GUTI allocated by the mobility management network element to the terminal device.

An entity device corresponding to the receiving unit 1401 may be a receiver, an entity device corresponding to the processing unit 1402 may be a processor, and an entity device corresponding to the sending unit 1403 may be a transmitter.

This embodiment of this application provides the paging processing apparatus. The paging processing apparatus can count the quantity of paging messages that are received in the specified duration and that each carry the temporary paging identity, and send, to the mobility management network element when determining that the counted quantity of paging messages is greater than or equal to the specified threshold, the indication information used to request to allocate the globally unique temporary identity GUTI. After receiving the GUTI sent by the mobility management network element, the paging processing apparatus processes, based on the GUTI sent by the mobility management network element, the paging message carrying the temporary paging identity. A false network cannot obtain the GUTI allocated by the mobility management network element to the terminal device based on the indication information. That is, a paging message sent by the false network to the terminal device does not carry a paging identity corresponding to the new GUTI allocated by the mobility management network element to the terminal device. Therefore, after the paging processing apparatus obtains the new GUTI sent by the mobility management network element, the paging processing apparatus does not respond to the paging message sent by the false network, so that a paging attack from the false network on the paging processing apparatus can be avoided.

An embodiment of this application further provides a paging processing apparatus. The paging processing apparatus is configured to implement the paging processing method shown in FIG. 7 to FIG. 9. As shown in FIG. 15, the paging processing apparatus 1500 includes a receiving unit 1501, an allocation unit 1502, and a sending unit 1503.

The receiving unit 1501 is configured to receive indication information that is sent by a terminal device and that is used to request to allocate a globally unique temporary identity GUTI.

The allocation unit 1502 is configured to allocate the GUTI to the terminal device based on the indication information.

The sending unit 1503 is configured to send the GUTI to the terminal device.

In a possible implementation, the receiving unit 1501 is specifically configured to receive a location update request sent by the terminal device, where the location update request carries the indication information used to request to allocate the GUTI.

The sending unit 1503 is specifically configured to send a location update accept message to the terminal device, where the location update accept message carries the GUTI.

In a possible implementation, the sending unit 1503 is specifically configured to send a GUTI reallocation message to the terminal device, where the GUTI reallocation message carries the GUTI; or send a configuration update message to the terminal device, where the configuration update message carries the GUTI.

An entity device corresponding to the receiving unit 1501 may be a receiver, an entity device corresponding to the allocation unit 1502 may be a processor, and an entity device corresponding to the sending unit 1503 may be a transmitter.

This embodiment of this application provides the paging processing apparatus. The paging processing apparatus can receive the indication information that is sent by the terminal device and that is used to request to allocate the globally unique temporary identity GUTI, allocate the GUTI to the terminal device based on the indication information, and send the allocated GUTI to the terminal device, so that the terminal device processes, based on the GUTI allocated by the mobile network element, a paging message carrying a temporary paging identity. A false network cannot obtain the GUTI allocated by the paging processing apparatus to the terminal device based on the indication information. That is, a paging message sent by the false network to the terminal device does not carry a paging identity corresponding to the new GUTI allocated by the paging processing apparatus to the terminal device. Therefore, after the terminal device obtains the new GUTI allocated by the paging processing apparatus to the terminal device, the terminal device does not respond to the paging message sent by the false network, so that a paging attack from the false network on the terminal device can be avoided.

It should be noted that, in the embodiments of this application, division into the units is an example, and is merely logical function division. During actual implementation, another division manner may be used. Function modules in the embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, the part contributing to the prior art, or all or some of the technical solutions may be implemented in the form of a software product. The computer software product is stored in a storage medium and includes several instructions for instructing a computer device (which may be a personal computer, a server, a network device, or the like) or a processor (processor) to perform all or some of the steps of the methods described in the embodiments of this application. The foregoing storage medium includes: any medium that can store program code, for example, a USB flash drive, a removable hard disk, a read-only memory (read-only memory, ROM), a random access memory (random access memory, RAM), a magnetic disk, or an optical disc.

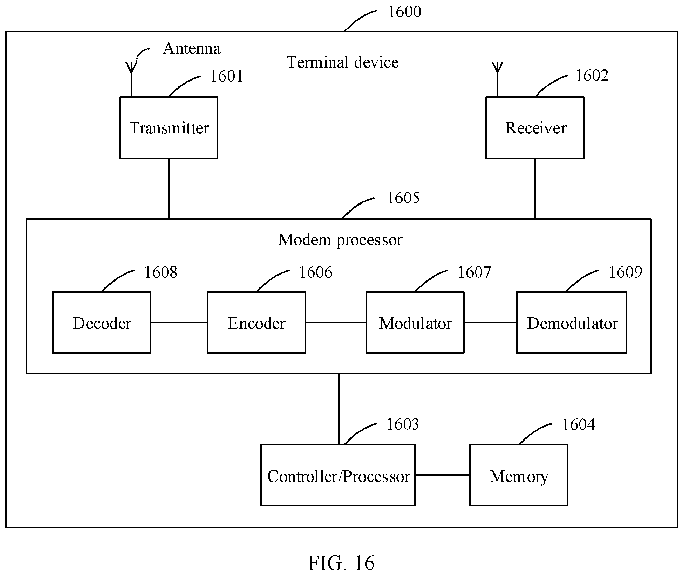

FIG. 16 is a simplified schematic diagram of a possible design structure of the terminal device in the foregoing embodiments. The terminal device includes a transmitter 1601, a receiver 1602, a controller/processor 1603, a memory 1604, and a modem processor 1605.

The transmitter 1601 adjusts (for example, analog converts, filters, amplifies, and up-converts) the output sample, and generates an uplink signal. The uplink signal is transmitted to the base station in the foregoing embodiments by using an antenna. On a downlink, the antenna receives a downlink signal transmitted by the base station in the foregoing embodiments. The receiver 1602 adjusts (for example, filters, amplifies, down-converts, and digitizes) a signal received from the antenna, and provides an input sample. In the modem processor 1605, an encoder 1606 receives service data and a signaling message that are to be sent in an uplink, and processes (for example, formats, encodes, and interleaves) the service data and the signaling message. A modulator 1607 further processes (for example, performs symbol mapping on and modulates) encoded service data and an encoded signaling message, and provides the output sample. A demodulator 1609 processes (for example, demodulates) the input sample, and provides symbol estimation. A decoder 1608 processes (for example, de-interleaves and decodes) the symbol estimation, and provides decoded data and a decoded signaling message that are to be sent to UE. The encoder 1606, the modulator 1607, the demodulator 1609, and the decoder 1608 may be implemented by the combined modem processor 1605. The units perform processing based on a radio access technology (for example, access technologies in LTE and another evolved system) used for a radio access network.

The controller/processor 1603 controls and manages an action of the terminal device, and is configured to perform processing performed by the terminal device in the foregoing embodiments. For example, the controller/processor 1603 is configured to control the terminal device to perform, based on the first indication information carried in the second paging message, security verification on the first paging identity by using the security context obtained by negotiating with the mobility management network element by the terminal device, to obtain the second paging identity, and process the second paging message based on the second paging identity and the identity of the terminal device; and/or control the terminal device to perform another process of the technology described in the present invention. For example, the controller/processor 1603 is configured to support the terminal device in performing steps S304 and S305 in FIG. 3, steps S404, S408 to S410a (or S410b), and S412 in FIG. 4A and FIG. 4B, step S504, S509 to S511a (or S511b), and S513 in FIG. 5A and FIG. 5B, steps S601 and S602 in FIG. 6, steps S701, S702, and S705 in FIG. 7, steps S801, S802, S805, and S808 in FIG. 8, and steps S901, S902, S905, and S908 in FIG. 9.

The memory 1604 is configured to store program code and data used for the terminal device 1600.

It should be noted that the terminal device 1600 provided in this embodiment of this application is configured to implement functions of the terminal device in the paging processing method shown in FIG. 3 to FIG. 5B, the paging processing method shown in FIG. 6, or the paging processing method shown in FIG. 7 to FIG. 9. Only a connection relationship between modules in the terminal device 1600 is described herein. For a specific solution in which the terminal device 1600 processes a paging message and a specific action performed by the terminal device 1600, refer to related descriptions in the foregoing method embodiments. Details are not described herein again.

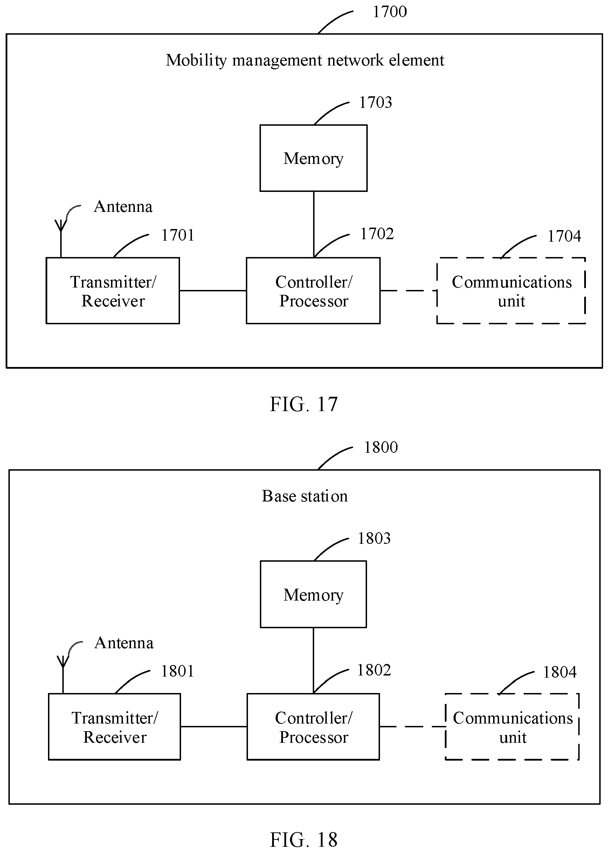

FIG. 17 is a possible schematic structural diagram of a mobility management network device in the foregoing embodiments. The mobility management network element 1700 includes a transmitter/receiver 1701, a controller/processor 1702, and a memory 1703.

The transmitter/receiver 1701 is configured to support information sending and receiving between the mobility management network element and the terminal device in the foregoing embodiments, and support radio communication between the terminal device and another terminal device. The controller/processor 1702 performs various functions for communicating with the terminal device. In an uplink, an uplink signal from the terminal device is received by using an antenna, is demodulated by the receiver 1701, and is further processed by the controller/processor 1702 to restore service data and signaling information that are sent by the terminal device. In a downlink, service data and a signaling message are processed by the controller/processor 1702, and are demodulated by the transmitter 1701 to generate a downlink signal, and the downlink signal is transmitted to the terminal device by using an antenna. The controller/processor 1702 further performs processing processes related to the mobility management network element in FIG. 3 to FIG. 5B and FIG. 7 to FIG. 9 and/or another process used for the technology described in this application.

The memory 1703 is configured to store program code and data of the mobility management network element. The mobility management network element 1700 may further include a communications unit 1704. The communications unit 1704 is configured to support the mobility management network element in communicating with another network entity. For example, the communications unit 1704 is configured to support the mobility management network element in communicating with another communications network entity shown in FIG. 1 (or FIG. 2), for example, the SGSN, the SGW, or the PGW in FIG. 1, or the AUSF entity or the SMF in FIG. 2.

It should be noted that the mobility management network element 1700 provided in this embodiment of this application is configured to implement functions of the mobility management network element in the paging processing method shown in FIG. 3 to FIG. 5B or the paging processing method shown in FIG. 7 to FIG. 9. Herein, only a connection relationship between modules in the mobility management network element 1700 is described. For a specific solution in which the mobility management network element 1700 processes a paging message and a specific action performed by the mobility management network element 1700, refer to related descriptions in the foregoing method embodiments. Details are not described herein again.

FIG. 18 is a possible schematic structural diagram of a base station in the foregoing embodiments. The base station 1800 includes a transmitter/receiver 1801, a controller/processor 1802, and a memory 1803.

The transmitter/receiver 1801 is configured to support information sending and receiving between a mobility management network element and the terminal device in the foregoing embodiments, and support radio communication between the terminal device and another terminal device. The controller/processor 1802 performs various functions for communicating with the terminal device. In an uplink, an uplink signal from the terminal device is received by using an antenna, is demodulated by the receiver 1801, and is further processed by the controller/processor 1802 to restore service data and signaling information that are sent by the terminal device. In a downlink, service data and a signaling message are processed by the controller/processor 1802, and are demodulated by the transmitter 1801 to generate a downlink signal, and the downlink signal is transmitted to the terminal device by using an antenna. The controller/processor 1802 further performs processing processes related to the mobility management network element in FIG. 3 to FIG. 5B and/or another process used for the technology described in this application.

The memory 1803 is configured to store program code and data of the mobility management network element. The base station 1800 may further include a communications unit 1804. The communications unit 1804 is configured to support the mobility management network element in communicating with another network entity. For example, the communications unit 1804 is configured to support the mobility management network element in communicating with another communications network entity shown in FIG. 1 (or FIG. 2), for example, the SGSN, the SGW, or the PGW in FIG. 1, or the AUSF entity or the SMF in FIG. 2.

It should be noted that the base station 1800 provided in this embodiment of this application is configured to implement functions of the base station in the paging processing method shown in FIG. 3 to FIG. 5B. Herein, only a connection relationship between modules in the base station 1800 is described. For a specific solution in which the base station 1800 processes a paging message and a specific action performed by the base station 1800, refer to related descriptions in the foregoing method embodiments. Details are not described herein again.

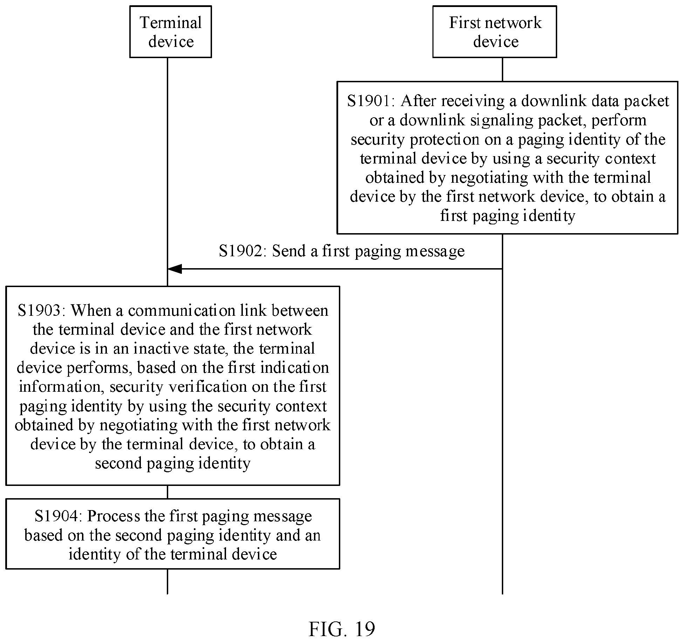

FIG. 19 shows a fourth paging processing method according to an embodiment of this application. The method is applied to a case in which a communication link between a terminal device and a first network device (an access network device) is in an inactive state, and a communication link between the first network device and a second network device (a core network device) is in a connected mode, namely, a scenario in which the terminal device and the access network device are in a radio resource control (radio resource control, RRC) inactive state, and the network side devices need to communicate with the terminal device, and is mainly applicable to the 5G communications system shown in FIG. 2. The method includes the following steps.

S1901: After receiving a downlink data packet or a downlink signaling packet, the first network device performs security protection on a paging identity of the terminal device by using a security context obtained by negotiating with the terminal device by the first network device, to obtain a first paging identity.

The first network device may be specifically a gNodeB (gNB) on a 5G network, a TRP, or the like, or may be a base station in a future network. A device for sending the downlink signaling packet or the downlink data packet is a core network device. A device for sending the downlink signaling packet may be a mobility management network element, for example, an AMF entity on the 5G network. A device for sending the downlink data packet may be a user plane management network element, for example, a UPF entity on the 5G network. If the first network device can receive the downlink data packet or the downlink signaling packet, it indicates that a communication link between the first network device and the core network device is in a connected mode in this case. The paging identity of the terminal device may be an inactive-radio network temporary identifier (inactive-radio network temporary identifier, I-RNTI).

S1902: The first network device sends a first paging message to the terminal device, where the first paging message carries the first paging identity and first indication information, and the first indication information is used to indicate that the first paging identity is a security-protected paging identity. In this case, the communication link between the first network device and the terminal device is in the inactive state.

The security context obtained by negotiating with the first network device by the terminal device is a security context at an RRC layer, and may be derived from a security context (namely, a security context obtained by negotiating with the mobility management network element by the terminal device) at a non-access stratum (non-access stratum, NAS).

Correspondingly, the terminal device receives the first paging information sent by the network device.

S1903: When the communication link between the terminal device and the first network device is in the inactive state, the terminal device performs, based on the first indication information, security verification on the first paging identity by using the security context obtained by negotiating with the first network device by the terminal device, to obtain a second paging identity.

In this case, the terminal device and the first network device are in the RRC inactive state.

S1904: The terminal device processes the first paging message based on the second paging identity and an identity of the terminal device.

For example, the terminal device may further receive a second paging message, where the second paging message does not carry the first indication information; and the terminal device ignores the second paging message; the terminal device receives a second paging message, where the second paging message carries a third paging identity and second indication information, and the second indication information is used to indicate that the third paging identity is in plaintext; and the terminal device ignores the second paging message.

Security protection is usually not performed on a paging identity carried in a paging message sent by a false network, and the paging message does not carry the first indication information. That is, the paging message sent by the false network is usually the second paging message. Therefore, the terminal device ignores the second paging message, so that a paging attack from the false network on the terminal device can be avoided, and the terminal device can successfully communicate with a real network.

For example, before receiving the downlink data packet or the downlink signaling packet, the first network device further needs to determine that both the terminal device and the second network device support a paging message carrying the security-protected paging identity. That the first network device determines that both the terminal device and the second network device support the paging message carrying the security-protected paging identity specifically includes:

Step A: The second network device sends indication information to the first network device, where the indication information sent by the second network device is used to indicate that the second network device and the terminal device support the paging message carrying the security-protected paging identity.

Correspondingly, the first network device receives the indication information sent by the second network device.

Step B: The first network device determines, based on the indication information sent by the second network device, that the terminal device and the second network device support the paging message carrying the security-protected paging identity.

Before the second network device sends the indication information to the first network device, the second network device further needs to determine that the terminal device supports the paging message carrying the security-protected paging identity. After the second network device further needs to determine that the terminal device supports the paging message carrying the security-protected paging identity, the second network device sends, to the terminal device, indication information for indicating that the second network device supports the paging message carrying the security-protected paging identity, so that the terminal device can determine, based on the indication information sent by the second network device, that the second network device supports the paging message carrying the security-protected paging identity.

A method for determining, by the second network device and the terminal device, that the opposite party supports the paging message carrying the security-protected paging identity specifically includes the following steps.
1. The terminal device sends a registration request to the second network device, where the registration request carries third indication information, and the third indication information is used to indicate that the terminal device supports the paging message carrying the security-protected paging identity.
   Correspondingly, the second network device receives the registration request sent by the terminal device. On the 5G network, the registration request may be a registration request registration request message.
   It should be noted that a specific format of the third indication information in the registration request is not limited in this embodiment of this application, and the third indication information may be carried in a reserved item of an existing information element in the registration request.
2. The second network device determines, based on the registration request, that the terminal device supports the paging message carrying the security-protected paging identity.
   After determining that the terminal device supports the paging message carrying the security-protected paging identity, the second network device may further send, to the first network device, the indication information used to indicate that the second network device and the terminal device support the paging message carrying the security-protected paging identity, so that the first network device determines that both the terminal device and the second network device support the paging message carrying the security-protected paging identity.
   For example, On the 5G network, after determining that the terminal device supports the paging message carrying the security-protected paging identity, the second network device may send, to the first network device by using an initial user context setup request initial UE context setup request message, the indication information used to indicate that the second network device and the terminal device support the paging message carrying the security-protected paging identity.
3. The second network device sends a registration accept message to the terminal device, where the registration accept message carries fourth indication information, and the fourth indication information is used to indicate that the second network device supports the paging message carrying the security-protected paging identity.
   Correspondingly, the terminal device receives the registration accept message sent by the second network device. When the registration request is a registration request message, the registration accept message is a registration accept message.
   It should be noted that a specific format of the fourth indication information in the registration request is not limited in this embodiment of this application, and the fourth indication information may be carried in a reserved item of an existing information element in the registration accept message. For example, when the registration accept message is the registration accept message, the fourth indication information may be carried in a reserved item of a 5GS network feature support information element.
4. The terminal device determines, based on the fourth indication information, that the second network device supports the paging message carrying the security-protected paging identity.

For example, when step S1901 is performed, the first network device may perform security protection on the paging identity of the terminal device in but not limited to any one of the following manners:
Manner 1: The first network device encrypts the paging identity of the terminal device by using the security context obtained by negotiating with the terminal device by the first network device.
Manner 2: The first network device performs integrity protection on the paging identity of the terminal device by using the security context obtained by negotiating with the terminal device by the first network device.
Manner 3: The first network device encrypts the paging identity of the terminal device, and then performs integrity protection on the encrypted paging identity by using the security context obtained by negotiating with the terminal device by the first network device.
Manner 4: The first network device performs integrity protection on the paging identity of the terminal device, and performs anti-replay processing on the integrity-protected paging identity by using the security context obtained by negotiating with the terminal device by the first network device.
Manner 5: The first network device encrypts the paging identity of the terminal device, then performs integrity protection on the encrypted paging identity, and performs anti-replay processing on the integrity-protected paging identity by using the security context obtained by negotiating with the terminal device by the first network device.

In the foregoing five manners, the security context includes a key and a corresponding encryption algorithm that are required for performing encryption and/or integrity protection on the paging identity of the terminal device.

Correspondingly, when performing step S1903, the terminal device may perform security verification on the first paging identity in, but not limited to, any one of the following manners, to obtain the second paging identity:
Manner 1: When the first network device performs security protection on the paging identity of the terminal device in the manner 1, the terminal device decrypts the first paging identity by using the security context agreed on by the terminal device and the first network device, to obtain the second paging identity.
Manner 2: When the first network device performs security protection on the paging identity of the terminal device in the manner 2, the terminal device performs integrity verification on the first paging identity by using the security context agreed on by the terminal device and the first network device, to obtain the second paging identity.
Manner 3: When the first network device performs security protection on the paging identity of the terminal device in the manner 3, the terminal device performs integrity verification and decryption on the first paging identity by using the security context agreed on by the terminal device and the first network device, to obtain the second paging identity.
Manner 4: When the first network device performs security protection on the paging identity of the terminal device in the manner 4, the terminal device performs integrity verification on the first paging identity, to obtain the second paging identity, and performs anti-replay verification on the second paging identity by using the security context agreed on by the terminal device and the first network device.
Manner 5: When the first network device performs security protection on the paging identity of the terminal device in the manner 5, the terminal device performs integrity verification and decryption on the first paging identity, to obtain the second paging identity, and performs anti-replay verification on the second paging identity by using the security context agreed on by the terminal device and the first network device.

In a specific implementation, when performing step S1904, the terminal device may process the first paging message in any one of the following specific manners:
Manner I: When determining that the first paging identity is consistent with the identity of the terminal device, that is, when determining that the first paging message is a paging message sent by the real network, the terminal device responds to the first paging message.
Manner II: When determining that the first paging identity is inconsistent with the identity of the terminal device, that is, when determining that the first paging message is not a paging message sent by the real network, the terminal device ignores the first paging message.

Specifically, when the terminal device determines that the first paging identity is inconsistent with the identity of the terminal device, the terminal device may not respond to the first paging message, or may directly discard the first paging message.

The false network cannot obtain the security context obtained by negotiating with the first network device by the terminal device. Therefore, the terminal device responds to the first paging message when the second paging identity is consistent with the identity of the terminal device, or ignores the second paging message when the second paging identity is inconsistent with the identity of the terminal device, so that the paging attack from the false network on the terminal device can be effectively avoided.

In this embodiment of this application, the terminal device receives the first paging message sent by the first network device, where the first paging message carries the first paging identity and the first indication information used to indicate that the first paging identity is the security-protected paging identity. If the communication link between the terminal device and the first network device is in the inactive state, the terminal device performs security verification on the first paging identity in the first paging message by using the security context obtained by negotiating with the first network device by the terminal device, to obtain the second paging identity. The terminal device processes the first paging message based on the second paging identity and the identity of the terminal device. The terminal device responds to the first paging message only when the second paging identity is consistent with the identity of the terminal device; otherwise, the terminal device ignores the paging message, instead of responding upon receiving the paging message. Therefore, the paging attack from the false network on the terminal device can be avoided.

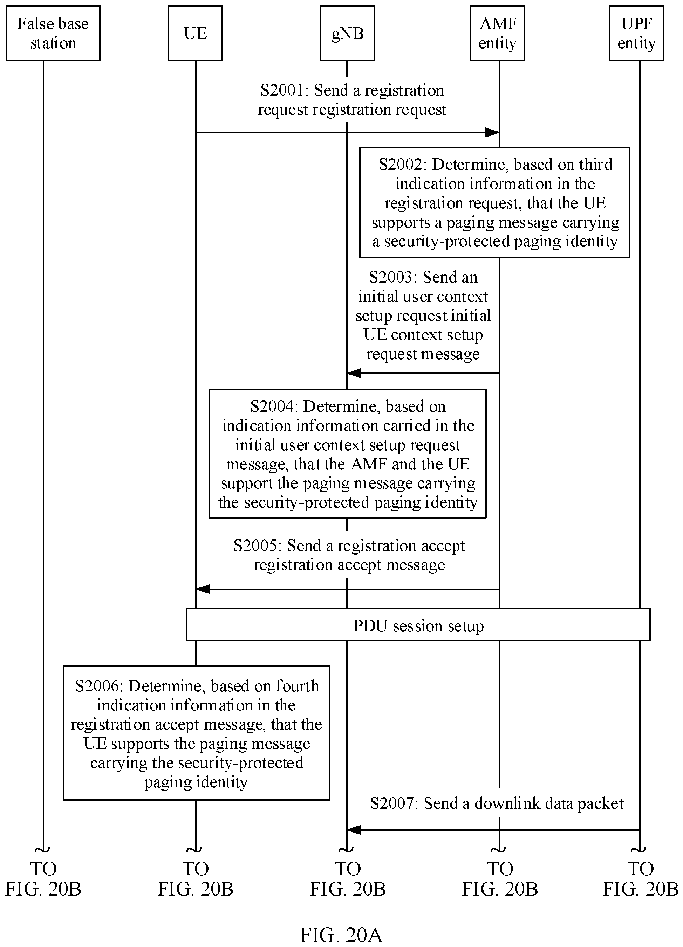

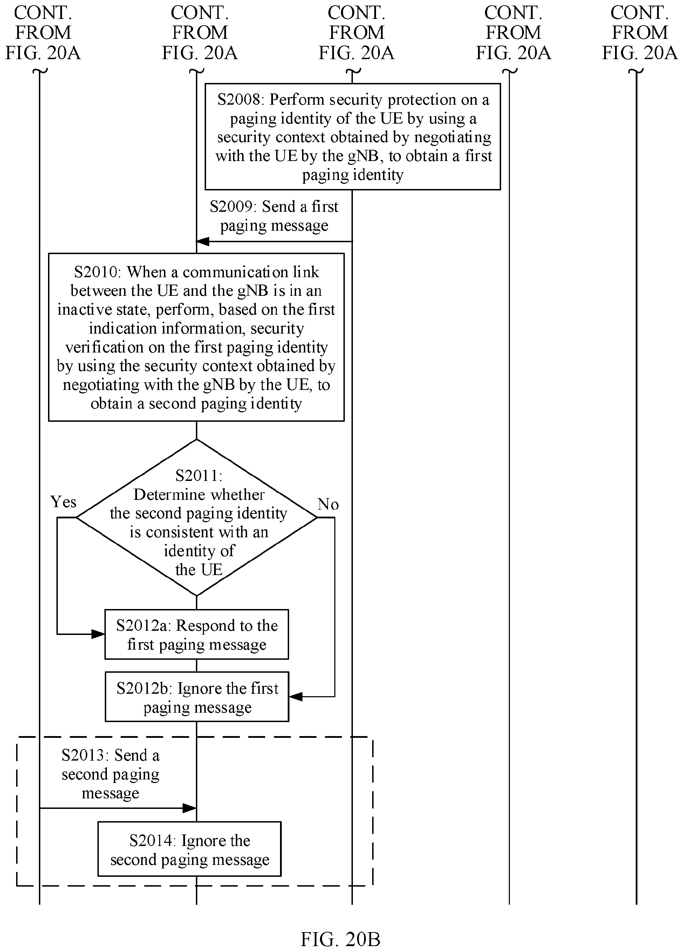

The following describes in detail, by using a specific embodiment 5, a scenario in which the first paging processing method provided in this embodiment of this application is applied to the 5G network. For example, the first network device is a gNB, the second network device is an AMF entity, and the terminal device is UE. As shown in FIG. 20A and FIG. 20B, the method includes the following steps.

S2001: UE sends a registration request message to the AMF entity, where the registration request message carries third indication information, and the third indication information is used to indicate that the UE supports a paging message carrying a security-protected paging identity.

Correspondingly, the AMF entity receives the registration request message.

S2002: The AMF entity determines, based on the third indication information in the registration request message, that the UE supports the paging message carrying the security-protected paging identity.

S2003: The AMF sends an initial UE context setup request message to the gNB, where the initial user context setup request initial UE context setup request message carries indication information used to indicate that the AMF and the UE support the paging message carrying the security-protected paging identity.

Correspondingly, the gNB receives the initial UE context setup request message.

S2004: The gNB determines, based on the indication information carried in the initial UE context setup request message, that the AMF and the UE support the paging message carrying the security-protected paging identity.

S2005: The AMF entity sends a registration accept message to the UE, where the registration accept message carries fourth indication information, and the fourth indication information is used to indicate that the AMF entity supports the paging message carrying the security-protected paging identity.

Correspondingly, the UE receives the registration accept message. In this case, a protocol data unit (protocol data unit, PDU) session (session) is set up between the UE and a network side, to transmit data.

Optionally, after receiving the registration accept message, the UE may further send a registration complete (registration complete) message to the AMF entity.

S2006: The UE determines, based on the fourth indication information in the registration accept, that the AMF entity supports the paging message carrying the security-protected paging identity.

According to the foregoing steps S2001 to S2006, the UE determines that the AMF entity supports the paging message carrying the security-protected paging identity, the AMF entity determines that the UE supports the paging message carrying the security-protected paging identity, and the gNB may determine that the AMF and the UE support the paging message carrying the security-protected paging identity, so that when a communication link between the gNB and the UE is in an inactive state, the gNB can page the UE by using the paging message carrying the security-protected paging identity.

S2007: The UPF entity sends a downlink data packet to the gNB.

Correspondingly, the gNB receives the downlink data packet sent by the UPF.

S2008: The gNB performs security protection on a paging identity of the UE by using a security context obtained by negotiating with the UE by the gNB, to obtain a first paging identity.

S2009: The gNB sends a first paging message to the UE, where the first paging message carries the first paging identity and first indication information.

Correspondingly, the UE receives the first paging message.

S2010: When the communication link between the UE and the gNB is in the inactive state, the UE performs, based on the first indication information, security verification on the first paging identity by using the security context obtained by negotiating with the gNB by the UE, to obtain a second paging identity.

S2011: The UE determines whether the second paging identity is consistent with an identity of the UE; and if the second paging identity is consistent with the identity of the UE, performs S2012a; otherwise, performs S2012b.

S2012a: The UE responds to the first paging message.

S2012b: The UE ignores the first paging message.

Optionally, after performing S2006, the UE may further directly perform step S2013: A false network sends a second paging message to the UE, where the second paging message does not carry the first indication information. After receiving the second paging message, the UE directly performs S2014: Ignore the second paging message.

In the foregoing embodiments provided in this application, the method provided in the embodiments of this application is described separately from a perspective of interaction between the terminal device, the first network device, and the second network device. It may be understood that, to implement the functions in the method provided in the embodiments of this application, the network elements such as the terminal device and the first network device include corresponding hardware structures and/or software modules for performing the functions. A person skilled in the art should be easily aware that, in combination with the examples described in the embodiments disclosed in this specification, algorithms steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, function module division may be performed on the terminal device and the first network device based on the foregoing method examples. For example, each function module may be obtained through division corresponding to each function, or two or more functions may be integrated in one processing module. The integrated module may be implemented in a form of hardware, or may be implemented in a form of a software function module. It should be noted that, in the embodiments of this application, division into the modules is an example, and is merely logical function division. During actual implementation, another division manner may be used.

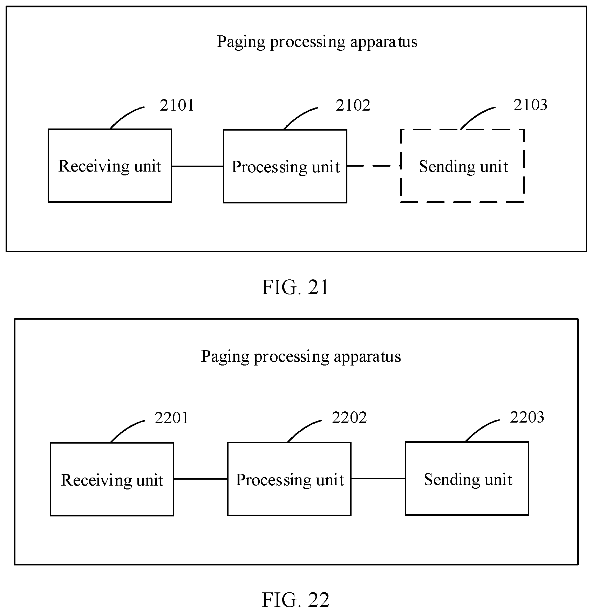

When each function module is obtained through division corresponding to each function, FIG. 21 is a possible composition example diagram 1 of the paging processing apparatus in the foregoing embodiments. The paging processing apparatus can perform steps performed by the terminal device in any possible implementation of the fourth method embodiment of this application. As shown in FIG. 21, the paging processing apparatus is a terminal device or a paging processing apparatus that supports a terminal device in implementing the method provided in the fourth method embodiment. For example, the paging processing apparatus may be a chip system. The communications apparatus may include a receiving unit 2101 and a processing unit 2102.

The receiving unit 2101 is configured to support the paging processing apparatus in performing the method described in the fourth method embodiment of this application. For example, the receiving unit 2101 is configured to perform or is configured to support the paging processing apparatus in performing S1902 in the paging processing method shown in FIG. 19 and S2005, S2009, and S2013 in the paging processing method shown in FIG. 20A and FIG. 20B.

The processing unit 2102 is configured to support the paging processing apparatus in performing S1903 and S1904 in the paging processing method in FIG. 19 and S2006, S2010, S2011, S2012a, S2012b, and S2014 in the paging processing method shown in FIG. 20A and FIG. 20B.

Further, the paging processing apparatus may further include a sending unit 2103. The sending unit 2103 is configured to support the paging processing apparatus in performing S2001 in the paging processing method shown in FIG. 20A and FIG. 20B.

It should be noted that all related content of the steps in the foregoing method embodiments may be cited in function descriptions of corresponding function modules. Details are not described herein again.

The paging processing apparatus provided in this embodiment of this application is configured to perform the method in any one of the foregoing embodiments, and therefore can achieve a same effect as the method in the foregoing embodiments.

An entity device corresponding to the receiving unit may be a receiver, an entity device corresponding to the sending unit may be a transmitter, and an entity device corresponding to the processing unit may be a processor.

When each function module is obtained through division corresponding to each function, FIG. 22 is a possible composition example diagram 2 of the paging processing apparatus in the foregoing embodiments. The paging processing apparatus can perform steps performed by the first network device in any possible implementation of the fourth method embodiment of this application. As shown in FIG. 22, the paging processing apparatus is a first network device or a paging processing apparatus that supports a first network device in implementing the method provided in the fourth method embodiment. For example, the paging processing apparatus may be a chip system. The paging processing apparatus may include a receiving unit 2201, a processing unit 2202, and a sending unit 2203.

The receiving unit 2201 is configured to support the paging processing apparatus in performing the method described in the fourth method embodiment of this application. For example, the receiving unit 2201 is configured to perform or is configured to support the paging processing apparatus in performing S1901 in the paging processing method shown in FIG. 19 and S2003 and S2007 in the paging processing method shown in FIG. 20A and FIG. 20B.

The processing unit 2202 is configured to support the paging processing apparatus in performing S1901 in the paging processing method shown in FIG. 19 and S2004 and S2008 in the paging processing method shown in FIG. 20A and FIG. 20B.

The sending unit 2203 is configured to support the paging processing apparatus in performing S1902 in the paging processing method shown in FIG. 19 and S2009 in the paging processing method shown in FIG. 20A and FIG. 20B.

It should be noted that all related content of the steps in the foregoing method embodiments may be cited in function descriptions of corresponding function modules. Details are not described herein again.

The paging processing apparatus provided in this embodiment of this application is configured to perform the method in any one of the foregoing embodiments, and therefore can achieve a same effect as the method in the foregoing embodiments.

An entity device corresponding to the receiving unit may be a receiver, an entity device corresponding to the sending unit may be a transmitter, and an entity device corresponding to the processing unit may be a processor.

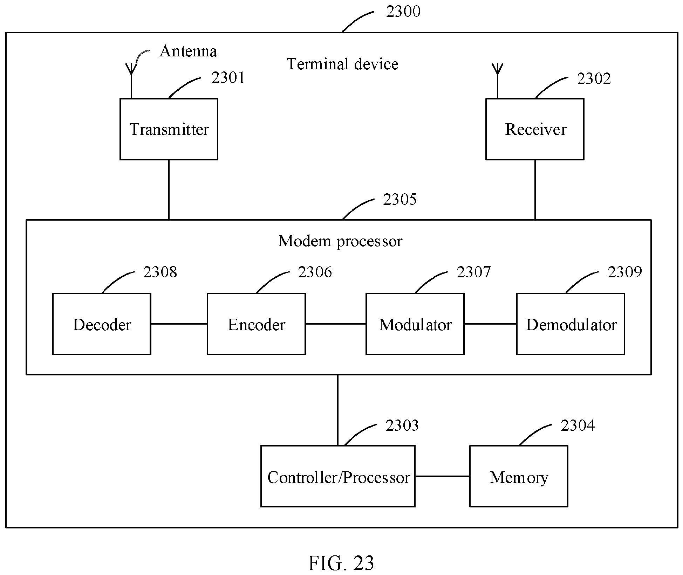

FIG. 23 is a simplified schematic diagram of a possible design structure of the terminal device in the fourth method embodiment. The terminal device includes a transmitter 2301, a receiver 2302, a controller/processor 2303, a memory 2304, and a modem processor 2305.

The transmitter 2301 adjusts (for example, analog converts, filters, amplifies, and up-converts) the output sample, and generates an uplink signal. The uplink signal is transmitted to the base station in the foregoing embodiments by using an antenna. On a downlink, the antenna receives a downlink signal transmitted by the base station in the foregoing embodiments. The receiver 2302 adjusts (for example, filters, amplifies, down-converts, and digitizes) a signal received from the antenna, and provides an input sample. In the modem processor 2305, an encoder 2306 receives service data and a signaling message that are to be sent in an uplink, and processes (for example, formats, encodes, and interleaves) the service data and the signaling message. A modulator 2307 further processes (for example, performs symbol mapping on and modulates) encoded service data and an encoded signaling message, and provides the output sample. A demodulator 2309 processes (for example, demodulates) the input sample, and provides symbol estimation. A decoder 2308 processes (for example, de-interleaves and decodes) the symbol estimation, and provides decoded data and a decoded signaling message that are to be sent to UE. The encoder 2306, the modulator 2307, the demodulator 2309, and the decoder 2308 may be implemented by the combined modem processor 2305. The units perform processing based on a radio access technology (for example, access technologies in LTE and another evolved system) used for a radio access network.

The controller/processor 2303 controls and manages an action of the terminal device, and is configured to perform processing performed by the terminal device in the foregoing embodiments. For example, the controller/processor 2303 is configured to control the terminal device to perform, based on the first indication information carried in the second paging message, security verification on the first paging identity by using the security context obtained by negotiating with the mobility management network element by the terminal device, to obtain the second paging identity, and process the second paging message based on the second paging identity and the identity of the terminal device; and/or control the terminal device to perform another process of the technology described in the present invention. For example, the controller/processor 2303 is configured to support the terminal device in performing steps S1903 and S1904 in FIG. 19 and steps S2006, S2010, S2011, S2012a, S2012b, and S2014 in FIG. 20A and FIG. 20B.

The memory 2304 is configured to store program code and data used for the terminal device 2300.

It should be noted that the terminal device 2300 provided in this embodiment of this application is configured to implement functions of the terminal device in the paging processing method shown in FIG. 19 to FIG. 20B. Only a connection relationship between modules in the terminal device 2300 is described herein. For a specific solution in which the terminal device 2300 processes a paging message and a specific action performed by the terminal device 2300, refer to related descriptions in the foregoing method embodiments. Details are not described herein again.

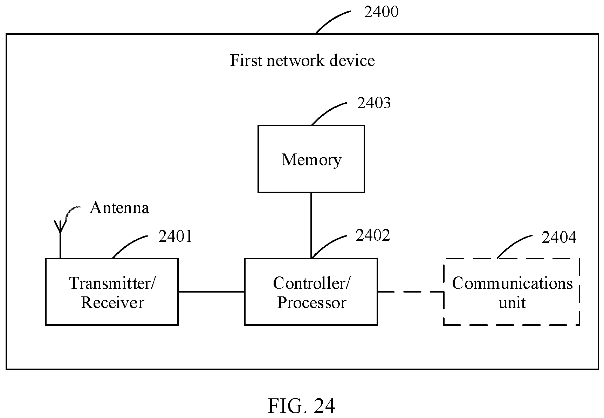

FIG. 24 is a possible schematic structural diagram of a first network device in the foregoing embodiments. The first network device 2400 includes a transmitter/receiver 2401, a controller/processor 2402, and a memory 2403.

The transmitter/receiver 2401 is configured to support information sending and receiving between a first network device and the terminal device in the foregoing embodiments, and support radio communication between the terminal device and another terminal device. The controller/processor 2402 performs various functions for communicating with the terminal device. In an uplink, an uplink signal from the terminal device is received by using an antenna, is demodulated by the receiver 2401, and is further processed by the controller/processor 2402 to restore service data and signaling information that are sent by the terminal device. In a downlink, service data and a signaling message are processed by the controller/processor 2402, and are demodulated by the transmitter 2401 to generate a downlink signal, and the downlink signal is transmitted to the terminal device by using an antenna. The controller/processor 2402 further performs processing processes related to the first network device in FIG. 19 to FIG. 20B and/or another process used for the technology described in this application.

The memory 2403 is configured to store program code and data of the first network device. The first network device 2400 may further include a communications unit 2404, and the communications unit 2404 is configured to support the first network device in communicating with another network entity. For example, the communications unit 2404 is configured to support the first network device in communicating with another communications network entity shown in FIG. 2, for example, the AUSF entity or the SMF in FIG. 2.

It should be noted that the first network device 2400 provided in this embodiment of this application is configured to implement functions of the first network device in the paging processing method shown in FIG. 19 to FIG. 20B. Only a connection relationship between modules in the first network device 2400 is described herein. For a specific solution in which the first network device 2400 processes a paging message and a specific action performed by the first network device 2400, refer to related descriptions in the foregoing method embodiments. Details are not described herein again.

In conclusion, the embodiments of this application provide the paging processing method and apparatus. Security protection is performed on a key information paging identity in the paging message, the terminal device is enabled to remain in the connected mode in a time after frequently receiving paging messages, or the new GUTI is obtained from the mobility management network element. In this way, it is more difficult for the false network to continuously perform the paging attack on the terminal device, the paging attack from the false network on the terminal device can be avoided, unnecessary power consumption of the terminal device can be reduced, and user experience can be improved.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specified function in one or more processes in the flowcharts and/or in one or more blocks in the block diagrams.

The computer program instructions may be stored in a computer-readable memory that can instruct the computer or the another programmable data processing device to work in a specific manner, so that instructions stored in the computer-readable memory generate an artifact that includes an instruction apparatus. The instruction apparatus implements a specified function in one or more processes in the flowcharts and/or in one or more blocks in the block diagrams.

The computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specified function in one or more processes in the flowcharts and/or in one or more blocks in the block diagrams.

Definitely, a person skilled in the art can make various modifications and variations to the embodiments of this application without departing from the spirit and scope of the embodiments of this application. This application is intended to cover these modifications and variations of the embodiments of this application provided that they fall within the scope of the claims of this application and their equivalent technologies.

## Claims

1. A paging processing method, comprising:
receiving, by a terminal device, a first paging message, wherein the first paging message carries a first paging identity and first indication information, and the first indication information is used to indicate that the first paging identity is a security-protected paging identity;
performing, by the terminal device based on the first indication information, security verification on the first paging identity by using a security context obtained by negotiating with a mobility management network element by the terminal device, to obtain a second paging identity; and
processing, by the terminal device, the first paging message based on the second paging identity and an identity of the terminal device.

2. The method according to claim 1, wherein the processing, by the terminal device, the first paging message based on the second paging identity and an identity of the terminal device comprises:
responding, by the terminal device, to the first paging message when determining that the second paging identity is consistent with the identity of the terminal device; or
ignoring, by the terminal device, the first paging message when determining that the second paging identity is inconsistent with the identity of the terminal device.

3. The method according to claim 1 or 2, wherein the method further comprises:
receiving, by the terminal device, a second paging message, wherein the second paging message does not carry the first indication information; and ignoring, by the terminal device, the second paging message; or
receiving, by the terminal device, a second paging message, wherein the second paging message carries a third paging identity and second indication information, and the second indication information is used to indicate that the third paging identity is in plaintext; and ignoring, by the terminal device, the second paging message.

4. The method according to any one of claims 1 to 3, wherein before the receiving, by a terminal device, a first paging message, the method further comprises:
determining, by the terminal device, that the mobility management network element supports a paging message carrying a security-protected paging identity.

5. The method according to claim 4, wherein the determining, by the terminal device, that the mobility management network element supports a paging message carrying a security-protected paging identity comprises:
sending, by the terminal device, a registration request to the mobility management network element, wherein the registration request carries third indication information, and the third indication information is used to indicate that the terminal device supports the paging message carrying the security-protected paging identity;
receiving, by the terminal device, a registration accept message sent by the mobility management network element, wherein the registration accept message carries fourth indication information, and the fourth indication information is used to indicate that the mobility management network element supports the paging message carrying the security-protected paging identity; and
determining, by the terminal device based on the fourth indication information, that the mobility management network element supports the paging message carrying the security-protected paging identity.

6. A paging processing method, comprising:
performing, by a mobility management network element, security protection on a paging identity of a terminal device by using a security context obtained by negotiating with the terminal device by the mobility management network element, to obtain a security-protected paging identity; and
sending, by the mobility management network element, a paging message to a base station, wherein the paging message comprises the paging identity of the terminal device and the security-protected paging identity.

7. The method according to claim 6, wherein before the performing, by a mobility management network element, security protection on a paging identity of a terminal device by using a security context obtained by negotiating with the terminal device by the mobility management network element, the method further comprises:
determining, by the mobility management network element, that the terminal device supports a paging message carrying a security-protected paging identity; and
sending, by the mobility management network element to the terminal device, indication information for indicating that the mobility management network element supports the paging message carrying the security-protected paging identity.

8. The method according to claim 7, wherein the determining, by the mobility management network element, that the terminal device supports a paging message carrying a security-protected paging identity comprises:
receiving, by the mobility management network element, a registration request sent by the terminal device, wherein the registration request carries indication information for indicating that the terminal device supports the paging message carrying the security-protected paging identity; and
determining, by the mobility management network element based on the indication information, that the terminal device supports the paging message carrying the security-protected paging identity; and
the sending, by the mobility management network element to the terminal device, indication information for indicating that the mobility management network element supports the paging message carrying the security-protected paging identity comprises:
sending, by the mobility management network element, a registration accept message to the terminal device, wherein the registration accept message carries the indication information for indicating that the mobility management network element supports the paging message carrying the security-protected paging identity.

9. A paging processing method, comprising:
receiving, by a base station, a first paging message sent by a mobility management network element, wherein the first paging message carries a first paging identity and a second paging identity, the first paging identity is obtained by performing security protection on the second paging identity by the mobility management network element by using a security context obtained by negotiating with a terminal device by the mobility management network element, and the second paging identity is a paging identity of the terminal device; and
sending, by the base station, a second paging message to the terminal device, wherein the second paging message carries the first paging identity and first indication information, and the first indication information is used to indicate that the first paging identity is a security-protected paging identity.

10. A paging processing method, comprising:
receiving, by a terminal device, a first paging message sent by a first network device, wherein the first paging message carries a first paging identity and first indication information, and the first indication information is used to indicate that the first paging identity is a security-protected paging identity;
when a communication link between the terminal device and the first network device is in an inactive state, performing, by the terminal device based on the first indication information, security verification on the first paging identity by using a security context obtained by negotiating with the first network device by the terminal device, to obtain a second paging identity; and
processing, by the terminal device, the first paging message based on the second paging identity and an identity of the terminal device.

11. The method according to claim 10, wherein the processing, by the terminal device, the first paging message based on the second paging identity and an identity of the terminal device comprises:
responding, by the terminal device, to the first paging message when determining that the second paging identity is consistent with the identity of the terminal device; or
ignoring, by the terminal device, the first paging message when determining that the second paging identity is inconsistent with the identity of the terminal device.

12. The method according to claim 10 or 11, wherein the method further comprises:
receiving, by the terminal device, a second paging message, wherein the second paging message does not carry the first indication information; and ignoring, by the terminal device, the second paging message; or
receiving, by the terminal device, a second paging message, wherein the second paging message carries a third paging identity and second indication information, and the second indication information is used to indicate that the third paging identity is in plaintext; and ignoring, by the terminal device, the second paging message.

13. The method according to any one of claims 10 to 12, wherein before the receiving, by a terminal device, a first paging message, the method further comprises:
determining, by the terminal device, that a second network device supports a paging message carrying a security-protected paging identity.

14. The method according to claim 13, wherein the determining, by the terminal device, that a second network device supports a paging message carrying a security-protected paging identity comprises:
sending, by the terminal device, a registration request to the second network device, wherein the registration request carries third indication information, and the third indication information is used to indicate that the terminal device supports the paging message carrying the security-protected paging identity;
receiving, by the terminal device, a registration accept message sent by the second network device, wherein the registration accept message carries fourth indication information, and the fourth indication information is used to indicate that the second network device supports the paging message carrying the security-protected paging identity; and
determining, by the terminal device based on the fourth indication information, that the second network device supports the paging message carrying the security-protected paging identity.

15. A paging processing method, comprising:
performing, by a first network device after receiving a downlink data packet or a downlink signaling packet, security protection on a paging identity of a terminal device by using a security context obtained by negotiating with the terminal device by the first network device, to obtain a security-protected paging identity; and
sending, by the first network device, a paging message to the terminal device, wherein the paging message carries the security-protected paging identity and indication information used to indicate that the carried paging identity is a security-protected paging identity.

16. The method according to claim 15, wherein before the receiving, by a first network device, a downlink data packet or a downlink signaling packet, the method further comprises:
determining, by the first network device, that the terminal device and a second network device support a paging message carrying a security-protected paging identity.

17. The method according to claim 16, wherein the determining, by the first network device, that the terminal device and a second network device support a paging message carrying a security-protected paging identity comprises:
receiving, by the first network device, indication information sent by the second network device, wherein the indication information sent by the second network device is used to indicate that the second network device and the terminal device support the paging message carrying the security-protected paging identity; and
determining, by the first network device based on the indication information sent by the second network device, that the terminal device and the second network device support the paging message carrying the security-protected paging identity.

18. A paging processing method, comprising:
counting, by a terminal device, a quantity of paging messages received in first specified duration; and
sending, by the terminal device to a base station when determining that the counted quantity of paging messages is greater than or equal to a first threshold, a data packet or a signaling packet that is used to maintain a communication connection to the base station.

19. The method according to claim 18, wherein the sending, by the terminal device to a base station, a data packet or a signaling packet that is used to maintain a communication connection to the base station comprises:
sending, by the terminal device to the base station in second specified duration based on a specified periodicity, the data packet or the signaling packet that is used to maintain the communication connection to the base station, wherein
the specified periodicity is less than a second threshold, and the second threshold is duration for maintaining the communication connection between the terminal device and the base station.

20. The method according to claim 18 or 19, wherein the paging message carries a permanent paging identity, or the paging message carries a temporary paging identity.

21. The method according to claim 18 or 19, wherein the paging messages comprise a first-type paging message and a second-type paging message, the first-type paging message carries a permanent paging identity, and the second-type paging message carries a temporary paging identity; and
the quantity of paging messages that is counted by the terminal device is a sum of a quantity of first-type paging messages received in the first specified duration and a quantity of second-type paging messages received in the first specified duration.

22. The method according to claim 18 or 19, wherein the counting, by a terminal device, a quantity of paging messages received in first specified duration comprises:
separately counting, by the terminal device, quantities of paging messages received from different base stations in the first specified duration; and
the determining, by the terminal device, that the counted quantity of paging messages is greater than or equal to a first threshold comprises:
determining, by the terminal device, that a quantity of paging messages received from any base station is greater than or equal to the first threshold.

23. A paging processing method, comprising:
counting, by a terminal device, a quantity of paging messages that are received in specified duration and that each carry a temporary paging identity;
sending, by the terminal device to a mobility management network element when determining that the counted quantity of paging messages is greater than or equal to a specified threshold, indication information used to request to allocate a globally unique temporary identity GUTI;
receiving, by the terminal device, the GUTI sent by the mobility management network element; and
processing, by the terminal device based on the received GUTI, a paging message carrying a temporary paging identity.

24. The method according to claim 23, wherein the sending, by the terminal device to a mobility management network element, indication information used to request to allocate a GUTI comprises:
sending, by the terminal device, a location update request to the mobility management network element, wherein the location update request carries the indication information used to request to allocate the GUTI; and
the receiving, by the terminal device, the GUTI sent by the mobility management network element comprises:
receiving, by the terminal device, a location update accept message sent by the mobility management network element, wherein the location update accept message carries the GUTI allocated by the mobility management network element to the terminal device.

25. The method according to claim 23, wherein the receiving, by the terminal device, the GUTI sent by the mobility management network element comprises:
receiving, by the terminal device, a GUTI reallocation message sent by the mobility management network element, wherein the GUTI reallocation message carries the GUTI allocated by the mobility management network element to the terminal device; or
receiving, by the terminal device, a configuration update message sent by the mobility management network element, wherein the configuration update message carries the GUTI allocated by the mobility management network element to the terminal device.

26. A paging processing method, comprising:
receiving, by a mobility management network element, indication information that is sent by a terminal device and that is used to request to allocate a globally unique temporary identity GUTI;
allocating, by the mobility management network element, the GUTI to the terminal device based on the indication information; and
sending, by the mobility management network element, the GUTI to the terminal device.

27. The method according to claim 26, wherein the receiving, by a mobility management network element, indication information that is sent by a terminal device and that is used to request to allocate a globally unique temporary identity GUTI comprises:
receiving, by the mobility management network element, a location update request sent by the terminal device, wherein the location update request carries the indication information used to request to allocate the GUTI; and
the sending, by the mobility management network element, the GUTI to the terminal device comprises:
sending, by the mobility management network element, a location update accept message to the terminal device, wherein the location update accept message carries the GUTI.

28. The method according to claim 26, wherein the sending, by the mobility management network element, the GUTI to the terminal device comprises:
sending, by the mobility management network element, a GUTI reallocation message to the terminal device, wherein the GUTI reallocation message carries the GUTI; or
sending, by the mobility management network element, a configuration update message to the terminal device, wherein the configuration update message carries the GUTI.

29. A paging processing apparatus, comprising a receiving unit and a processing unit, wherein
the receiving unit is configured to receive a first paging message, wherein the first paging message carries a first paging identity and first indication information, and the first indication information is used to indicate that the first paging identity is a security-protected paging identity; and
the processing unit is configured to perform, based on the first indication information in the first paging message received by the receiving unit, security verification on the first paging identity by using a security context obtained by negotiating with a mobility management network element by the paging processing apparatus, to obtain a second paging identity; and process the first paging message based on the second paging identity and an identity of the terminal device.

30. The apparatus according to claim 29, wherein the processing unit is specifically configured to:
respond to the first paging message when determining that the second paging identity is consistent with the identity of the terminal device; or
ignore the first paging message when determining that the second paging identity is inconsistent with the identity of the terminal device.

31. The apparatus according to claim 29 or 30, wherein the receiving unit is further configured to:
receive a second paging message, wherein the second paging message does not carry the first indication information, and the terminal device ignores the second paging message; or
receive a second paging message, wherein the second paging message carries a third paging identity and second indication information, and the second indication information is used to indicate that the third paging identity is in plaintext, and the terminal device ignores the second paging message.

32. The apparatus according to any one of claims 29 to 31, wherein before the receiving unit receives the first paging message, the processing unit is further configured to:
determine that the mobility management network element supports a paging message carrying a security-protected paging identity.

33. The apparatus according to claim 32, wherein the apparatus further comprises:
a sending unit, configured to send a registration request to the mobility management network element, wherein the registration request carries third indication information, and the third indication information is used to indicate that the terminal device supports the paging message carrying the security-protected paging identity, wherein
the receiving unit is further configured to receive a registration accept message sent by the mobility management network element, wherein the registration accept message carries fourth indication information, and the fourth indication information is used to indicate that the mobility management network element supports the paging message carrying the security-protected paging identity; and
the processing unit is specifically configured to determine, based on the fourth indication information, that the mobility management network element supports the paging message carrying the security-protected paging identity.

34. A paging processing apparatus, comprising a processing unit and a sending unit, wherein
the processing unit is configured to perform security protection on a paging identity of a terminal device by using a security context obtained by negotiating with the terminal device by the paging processing apparatus, to obtain a security-protected paging identity; and
the sending unit is configured to send a paging message to a base station, wherein the paging message comprises the paging identity of the terminal device and the security-protected paging identity.

35. The apparatus according to claim 34, wherein before performing security protection on the paging identity of the terminal device by using the security context obtained by negotiating with the terminal device by the mobility management network element, the processing unit is further configured to:
determine that the terminal device supports a paging message carrying a security-protected paging identity; and
the sending unit is further configured to send, to the terminal device, indication information for indicating that the mobility management network element supports the paging message carrying the security-protected paging identity.

36. The apparatus according to claim 35, wherein the apparatus further comprises:
a receiving unit, configured to receive a registration request sent by the terminal device, wherein the registration request carries indication information for indicating that the terminal device supports the paging message carrying the security-protected paging identity;
the processing unit is specifically configured to determine, based on the indication information carried in the registration request received by the receiving unit, that the terminal device supports the paging message carrying the security-protected paging identity; and
the sending unit is specifically configured to send a registration accept message to the terminal device, wherein the registration accept message carries the indication information for indicating that the mobility management network element supports the paging message carrying the security-protected paging identity.

37. A paging processing apparatus, comprising a receiving unit, a sending unit, and a processing unit, wherein the receiving unit is configured to receive a first paging message sent by a mobility management network element, wherein the first paging message carries a first paging identity and a second paging identity, the first paging identity is obtained by performing security protection on the second paging identity by the mobility management network element by using a security context obtained by negotiating with a terminal device by the mobility management network element, and the second paging identity is a paging identity of the terminal device;
the processing unit is configured to determine, based on the second paging identity, the terminal device to be paged by the mobility management network element; and
the sending unit is configured to send a second paging message to the terminal device, wherein the second paging message carries the first paging identity and first indication information, and the first indication information is used to indicate that the first paging identity is a security-protected paging identity.

38. A paging processing apparatus, comprising a receiving unit and a processing unit, wherein
the receiving unit is configured to receive a first paging message sent by a first network device, wherein the first paging message carries a first paging identity and first indication information, and the first indication information is used to indicate that the first paging identity is a security-protected paging identity; and
the processing unit is configured to: when determining that a communication link between the apparatus and the first network device is in an inactive state, perform, based on the first indication information, security verification on the first paging identity by using a security context obtained by negotiating with the first network device by the paging processing apparatus, to obtain a second paging identity; and process the first paging message based on the second paging identity and an identity of the terminal device.

39. The apparatus according to claim 38, wherein the processing unit is specifically configured to respond to the first paging message when determining that the second paging identity is consistent with the identity of the terminal device; or
ignore the first paging message when determining that the second paging identity is inconsistent with the identity of the terminal device.

40. The apparatus according to claim 38 or 39, wherein the receiving unit is further configured to receive a second paging message, wherein the second paging message does not carry the first indication information; and the processing unit is further configured to ignore the second paging message; or
the receiving unit is further configured to receive a second paging message, wherein the second paging message carries a third paging identity and second indication information, and the second indication information is used to indicate that the third paging identity is in plaintext; and the processing unit is further configured to ignore the second paging message.

41. The apparatus according to any one of claims 38 to 40, wherein the processing unit is further configured to:
before the receiving unit receives the first paging message, determine that a second network device supports a paging message carrying a security-protected paging identity.

42. The apparatus according to claim 41, wherein the apparatus further comprises a sending unit, configured to send a registration request to the second network device, wherein the registration request carries third indication information, and the third indication information is used to indicate that the terminal device supports the paging message carrying the security-protected paging identity;
the receiving unit is further configured to receive a registration accept message sent by the second network device, wherein the registration accept message carries fourth indication information, and the fourth indication information is used to indicate that the second network device supports the paging message carrying the security-protected paging identity; and
the processing unit is specifically configured to determine, based on the fourth indication information, that the second network device supports the paging message carrying the security-protected paging identity.

43. A paging processing apparatus, comprising a receiving unit, a processing unit, and a sending unit, wherein
the receiving unit is configured to receive a downlink data packet or a downlink signaling packet;
the processing unit is configured to: after the receiving unit receives the downlink data packet or the downlink signaling packet, perform security protection on a paging identity of a terminal device by using a security context obtained by negotiating with the terminal device by the first network device, to obtain a security-protected paging identity; and
the sending unit is configured to send a paging message to the terminal device, wherein the paging message carries the security-protected paging identity and indication information used to indicate that the carried paging identity is a security-protected paging identity.

44. The apparatus according to claim 43, wherein the processing unit is further configured to:
before the receiving unit receives the downlink data packet or the downlink signaling packet, determine that the terminal device and a second network device support a paging message carrying a security-protected paging identity.

45. The apparatus according to claim 44, wherein the receiving unit is further configured to receive indication information sent by the second network device, wherein the indication information sent by the second network device is used to indicate that the second network device and the terminal device support the paging message carrying the security-protected paging identity; and
the processing unit is specifically configured to determine, based on the indication information sent by the second network device, that the terminal device and the second network device support the paging message carrying the security-protected paging identity.

46. A paging processing apparatus, comprising a receiving unit, a processing unit, and a sending unit, wherein the receiving unit is configured to receive a paging message;
the processing unit is configured to: count a quantity of paging messages received by the receiving unit in first specified duration; and determine that the counted quantity of paging messages is greater than or equal to a first threshold; and
the sending unit is configured to: when the processing unit determines that the counted quantity of paging messages is greater than or equal to the first threshold, send, to a base station, a data packet or a signaling packet that is used to maintain a communication connection to the base station.

47. The apparatus according to claim 46, wherein the sending unit is specifically configured to:
send, to the base station in second specified duration based on a specified periodicity, the data packet or the signaling packet that is used to maintain the communication connection to the base station, wherein
the specified periodicity is less than a second threshold, and the second threshold is duration for maintaining the communication connection between the terminal device and the base station.

48. The apparatus according to claim 46 or 47, wherein the paging message carries a permanent paging identity, or the paging message carries a temporary paging identity.

49. The apparatus according to claim 46 or 47, wherein the paging messages comprise a first-type paging message and a second-type paging message, the first-type paging message carries a permanent paging identity, and the second-type paging message carries a temporary paging identity; and
the quantity of paging messages that is counted by the terminal device is a sum of a quantity of first-type paging messages received in the first specified duration and a quantity of second-type paging messages received in the first specified duration.

50. The apparatus according to claim 46 or 47, wherein the processing unit is specifically configured to:
separately count quantities of paging messages received from different base stations in the first specified duration; and
determine that a quantity of paging messages received from any base station is greater than or equal to the first threshold.

51. A paging processing apparatus, comprising a receiving unit, a processing unit, and a sending unit, wherein the receiving unit is configured to receive a paging message carrying a temporary paging identity;
the processing unit is configured to: count a quantity of paging messages that are received by the receiving unit in specified duration and that each carry the temporary paging identity; and determine that the counted quantity of paging messages is greater than or equal to a specified threshold;
the sending unit is configured to: when the processing unit determines that the counted quantity of paging messages is greater than or equal to the specified threshold, send, to a mobility management network element, indication information used to request to allocate a globally unique temporary identity GUTI;
the receiving unit is further configured to receive the GUTI sent by the mobility management network element; and
the processing unit is further configured to process, based on the GUTI received by the receiving unit, a paging message carrying a temporary paging identity.

52. The apparatus according to claim 51, wherein the sending unit is specifically configured to:
send a location update request to the mobility management network element, wherein the location update request carries the indication information used to request to allocate the GUTI; and
the receiving unit is specifically configured to receive a location update accept message sent by the mobility management network element, wherein the location update accept message carries the GUTI allocated by the mobility management network element to the terminal device.

53. The apparatus according to claim 51, wherein the receiving unit is specifically configured to:
receive a GUTI reallocation message sent by the mobility management network element, wherein the GUTI reallocation message carries the GUTI allocated by the mobility management network element to the terminal device; or
receive a configuration update message sent by the mobility management network element, wherein the configuration update message carries the GUTI allocated by the mobility management network element to the terminal device.

54. A paging processing apparatus, comprising a receiving unit, an allocation unit, and a sending unit, wherein the receiving unit is configured to receive indication information that is sent by a terminal device and that is used to request to allocate a globally unique temporary identity GUTI;
the allocation unit is configured to allocate the GUTI to the terminal device based on the indication information received by the receiving unit; and
the sending unit is configured to send, to the terminal device, the GUTI allocated by the processing unit.

55. The apparatus according to claim 54, wherein the receiving unit is specifically configured to:
receive a location update request sent by the terminal device, wherein the location update request carries the indication information used to request to allocate the GUTI; and
the sending unit is specifically configured to send a location update accept message to the terminal device, wherein the location update accept message carries the GUTI.

56. The apparatus according to claim 54, wherein the sending unit is specifically configured to:
send a GUTI reallocation message to the terminal device, wherein the GUTI reallocation message carries the GUTI; or
send a configuration update message to the terminal device, wherein the configuration update message carries the GUTI.

57. A computer storage medium, wherein the computer storage medium stores a computer-executable instruction, and when invoked by a computer, the computer-executable instruction is used to enable the computer to perform the method according to any one of claims 1 to 9.

58. A computer storage medium, wherein the computer storage medium stores a computer-executable instruction, and when invoked by a computer, the computer-executable instruction is used to enable the computer to perform the method according to any one of claims 10 to 17.

59. A computer storage medium, wherein the computer storage medium stores a computer-executable instruction, and when invoked by a computer, the computer-executable instruction is used to enable the computer to perform the method according to any one of claims 18 to 22.

60. A computer storage medium, wherein the computer storage medium stores a computer-executable instruction, and when invoked by a computer, the computer-executable instruction is used to enable the computer to perform the method according to any one of claims 23 to 28.

61. A computer program product comprising an instruction, wherein when the computer program product runs on a computer, the computer is enabled to perform the method according to any one of claims 1 to 9.

62. A computer program product comprising an instruction, wherein when the computer program product runs on a computer, the computer is enabled to perform the method according to any one of claims 10 to 17.

63. A computer program product comprising an instruction, wherein when the computer program product runs on a computer, the computer is enabled to perform the method according to any one of claims 18 to 22.

64. A computer program product comprising an instruction, wherein when the computer program product runs on a computer, the computer is enabled to perform the method according to any one of claims 23 to 28.
